(19) Europäisches Patentamt
European Patent Office
Office européen des brevets

(11) EP 3 733 815 B1

(12) **EUROPEAN PATENT SPECIFICATION**

(45) Date of publication and mention of the grant of the patent:
**23.08.2023 Bulletin 2023/34**

(21) Application number: **20171305.4**

(22) Date of filing: **24.04.2020**

(51) International Patent Classification (IPC):
***C09K 19/00*** *(2006.01)* ***G02F 1/137*** *(2006.01)*

(52) Cooperative Patent Classification (CPC):
**G02F 1/13718; C09K 19/00; C09K 19/3068; C09K 19/586; C09K 19/60; G02F 1/13737;**
C09K 2019/3019; C09K 2019/3077; G02F 1/133553; G02F 1/13706; G02F 1/13712

(54) **REFLECTIVE LIQUID CRYSTAL DISPLAY DEVICE COMPRISING A DYE-DOPED LIQUID CRYSTAL COMPOSITION**

REFLEKTIVE FLÜSSIGKRISTALL-ANZEIGE UMFASSEND EINE FARBSTOFFDOTIERTE FLÜSSIGKRISTALL-MISCHUNG

DISPOSITIF À CRISTAUX LIQUIDES REFLECTIVE COMPRENANT UNE COMPOSITION À CRISTAUX LIQUIDES DOTÉE AVEC UN COLORANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.04.2019 CN 201910354023**

(43) Date of publication of application:
**04.11.2020 Bulletin 2020/45**

(73) Proprietor: **Jiangsu Hecheng Display Technology Co., Ltd.**
**Nanjing, Jiangsu 210000 (CN)**

(72) Inventors:
- **WANG, Lina**
  **Yangzhong City, Jiangsu 212212 (CN)**
- **DING, Wenquan**
  **Yangzhong City, Jiangsu 212212 (CN)**
- **ZHOU, Zhenting**
  **Yangzhong City, Jiangsu 212212 (CN)**
- **YANG, Yafei**
  **Yangzhong City, Jiangsu 212212 (CN)**

(74) Representative: **Serjeants LLP**
**Dock**
**75 Exploration Drive**
**Leicester, LE4 5NU (GB)**

(56) References cited:
**US-A1- 2008 292 817** **US-A1- 2010 227 084**
**US-A1- 2012 217 438**

- **TRIVEDI R P ET AL: "Optical manipulation of colloids and defect structures in anisotropic liquid crystal fluids", JOURNAL OF OPTICS, INSTITUTE OF PHYSICS PUBLISHING, BRISTOL GB, vol. 13, no. 4, 4 March 2011 (2011-03-04), page 44001, XP020189668, ISSN: 2040-8986, DOI: 10.1088/2040-8978/13/4/044001**
- **J. PARKA ET AL: "Investigation of twist elastic constant K22 of new nematic liquid crystal materials unsing threshold IPS method", OPTO-ELECTRONICS REVIEW, vol. 19, no. 1, 1 January 2011 (2011-01-01), XP055720041, PL ISSN: 1230-3402, DOI: 10.2478/s11772-010-0074-z**
- **GONG XIN HE ET AL: "Fluorescence and absorption studies of the cation-binding behavior of "crowned" liquid crystals in solution and in the nematic phase", THE JOURNAL OF ORGANIC CHEMISTRY, vol. 55, no. 2, 1 January 1990 (1990-01-01), pages 548-554, XP055024458, ISSN: 0022-3263, DOI: 10.1021/jo00289a029**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 733 815 B1

## Description

### TECHNICAL FIELD

The present invention relates to the field of liquid crystal display, in particular to a reflective liquid crystal display device comprising a dye-doped liquid crystal composition.

### BACKGROUND ARTS

A revolution in the information display technology began in the early 1970s with the invention of the liquid crystal display (LCD). Since the LCD is a flat-panel display of light weight and low power which provides a visual readout capacity that conforms to the small size, light weight and battery demands of a handheld electronic device, this display technology enabled a new broad class of handheld and other portable products. Commercially, the LCD first appeared in volume as a digital readout on wrist watches, then on instruments and, later, enabled the laptop computer, personal data assistant and many other digital devices. Although a relatively low power consumption is required for these portable devices, conventional back-lit liquid crystal displays cannot meet the requirements. Thus, a reflective liquid crystal display device with a reflective layer, which can display an image without a backlight, has emerged at the right moment.

One common reflective liquid crystal display device is implemented by disposing an upper polarizer, a lower polarizer and a reflective layer on the basis of a liquid crystal cell. Its structure, from top to bottom, comprises: an upper polarizer, an upper substrate, an upper conductive layer, an upper alignment layer, a liquid crystal layer, a lower alignment layer, a lower conductive layer, a lower substrate, a lower polarizer (the above is referred to as a liquid crystal cell) and a reflective layer, and sometimes further comprises a quarter-wave plate or a brightness enhancement film. Due to the different types of liquid crystals used in the liquid crystal layer, the corresponding reflective liquid crystal display devices have various display modes. The most commonly used is a TN-type reflective liquid crystal display device, in which the transmission axes of the upper and lower polarizers are perpendicular to each other. The liquid crystal molecular axis is in a direction perpendicular to that of the electric field when no electric field is applied, the light may transmit through the liquid crystal cell to the reflective layer, and re-transmit through the liquid crystal cell after being reflected, thereby causing a bright state. The liquid crystal molecular axis is in a direction parallel to that of the electric field when an electric field is applied, and the light cannot transmit through the liquid crystal cell to the reflective layer (i.e., no light reflection) since the transmission axes of the upper and lower polarizers are perpendicular to each other, thereby causing a dark state. Another common VA-type reflective liquid crystal display device has a principle opposite to that of the TN-type reflective liquid crystal display device, in which the transmission axes of the upper and lower polarizers are perpendicular to each other. The liquid crystal molecular axis is in a direction parallel to that of the electric field when no electric field is applied, and the light is absorbed by polarizers whose transmission axes are perpendicular to each other, thereby causing a dark state. The liquid crystal molecular axis is in a direction perpendicular to that of the electric field when an electric field is applied, and the light can reach the reflective layer and be reflected via the retardation effect of the liquid crystal layer, thereby causing a bright state. In either display mode, such reflective liquid crystal devices indispensably require an upper polarizer and a lower polarizer (even a quarter-wave plate and a brightness enhancement film), leading to high manufacturing costs and deficient viewing angle characteristics for devices (as shown in Fig. 3).

Another common reflective liquid crystal display device is implemented using a cholesteric liquid crystal. Due to the helical structure of the cholesteric liquid crystal molecules, there will be a Bragg reflection wherein the reflection wavelength is associated with the pitch and average refractivity of the cholesteric liquid crystal molecules, when they are in a planar texture (i.e., the spiral axis of the liquid crystal molecules being perpendicular to the liquid crystal substrate). In such a display mode, it is merely necessary to coat a layer of black reflective material or highly-reflective material on the back side of the liquid crystal cell since the cholesteric liquid crystal itself can realize reflection. However, the helical structure of the cholesteric liquid crystal molecules leads to an increased resistance to the free rotation of the cholesteric liquid crystal molecules and a relatively larger viscosity of the cholesteric liquid crystals. Thus, cholesteric reflective liquid crystal display device generally has larger driving voltage and slow response speed.

Chinese patent application CN104216166A discloses a reflective display panel comprising a guest-host liquid crystal in which a dichroic dye (guest) is dissolved in the liquid crystal (host). The dyes may absorb lights with different wavelengths in visible spectra and render the liquid crystal devices display different colors, thereby realizing color display. In general, the dichroic dyes have anisotropic absorption of visible light in the direction of long and short axes of molecules. The light is absorbed when the vibration direction of an incident light is consistent with the long axis of the dyes; whereas the light may transmit when the vibration direction of an incident light is perpendicular to the long axis of the dyes. Thus, the dyes are in two states of absorption state and non-absorption state in device use. Since the dye molecules are aligned in parallel to the alignment of liquid crystal molecules, the alignment of dye molecules changes with the alignment of liquid crystal molecules when an electric field is applied, thereby changing the absorption for visible light by the dyes. Fig. 1 is a working schematic diagram of a reflective display device comprising a dye-doped liquid crystal composition

with positive dielectric anisotropy. When no electric field is applied, the dye molecules together with the liquid crystal molecules are in a contorted alignment parallel to the upper and lower substrates, and the incident light has a polarization direction parallel to the upper and lower substrates, resulting in a light absorption and a dark state. When an electric field is applied, the dye molecules together with the liquid crystal molecules are perpendicular to the upper and lower substrates as well as the polarization direction of the incident light, such that the light may transmit through the liquid crystal layer and be reflected, thereby causing a bright state. Fig. 2 is a working schematic diagram of a reflective display device comprising a dye-doped liquid crystal composition with negative dielectric anisotropy, which has a display principle opposite to that of Fig. 1. When no electric field is applied, the dye molecules together with the liquid crystal molecules are in a "standing-up" alignment, thereby causing a dark state; when an electric field is applied, the dye molecules together with the liquid crystal molecules fall down to be in an direction parallel to the upper and lower substrates, and are in an contorted alignment due to the effect of a chiral dopant, thereby causing a light absorption and a dark state. Via utilizing this characteristic of dyes and disposing a reflective layer under the dye-doped liquid crystal cell, a reflective display can be realized in which the dark state and bright state of devices are achieved in the absorption and non-absorption states of dyes respectively. However, the dye molecules in the existing dye-doped liquid crystals generally has a solubility of less than 2.5% in the liquid crystal, resulting in higher reflectivity in dark state and poor contrast. In addition, there is a problem of low orderness for the liquid crystal media in the prior art, which likewise has an impact on contrast and causes poor display effect. Moreover, the reflective display panel comprising a guest-host liquid crystal still inevitably requires a polarizer, and has no reduction in the manufacturing costs.

US 2012/0217438 A1 discloses mixture compositions suitable for reflective display device as those mentioned above. One composition in Example 11 therein comprises a component according to formula M as well as a component according to formula A of the present invention. However, the concentration ranges; are different than in the present invention, as the publication aims at improving the rotational viscosity of the mixtures.

## SUMMARY OF THE INVENTION

### Objects:

In order to overcome the shortcomings of the reflective display device in the prior art, such as an increased costs caused by the requirements for polarizers, brightness enhancement films and phase retarders, and poor viewing angle characteristics, it is an object of the present invention to provide a reflective liquid crystal display device comprising a dye-doped liquid crystal composition, which has advantages such as high contrast, high reliability, wide operating temperature range, wide viewing angle, good low-temperature stability, wide application range, and no disclination in the intermediate state when applying a voltage.

### Technical solutions of the present invention:

In order to achieve the above object, the present invention provides a reflective liquid crystal display device according to claim 1.

In some embodiments of the present invention, the reflective layer is a specular reflective layer and/or a diffuse reflective layer. The reflective layer may be a metal reflective layer (such as a metal film plated with aluminum, silver, gold, copper, chromium, platinum, and so forth), a dielectric reflective layer, or a metal-dielectric reflective layer plated on the lower substrate. The reflective layer may further include glass, a metal layer, paper or plastic, which have a reflective function and are disposed under the lower substrate, or a metal reflective layer, a dielectric reflective layer or a metal-dielectric reflective layer may be re-plated on the glass or metal surface to achieve the reflection.

In some embodiments of the present invention, a diffuser or other films or sheets with a scattering function may also be disposed between the lower substrate and the reflective layer to increase the scattering of reflected light.

The liquid crystal composition comprises at least one compound of general formula M:

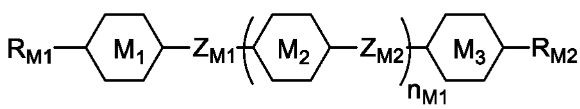

M,

in which,

$R_{M1}$ and $R_{M2}$ each independently represents -H, a $C_{1-12}$ linear or branched alkyl,

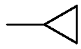,

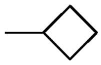 or 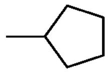,

one or more nonadjacent $-CH_2-$ in the $C_{1-12}$ linear or branched alkyl can each be independently replaced by -CH=CH-, -C=C-, -O-, -CO-, -CO-O- or -O-CO-;

ring

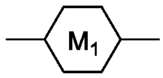,

ring

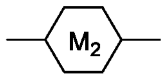

and ring

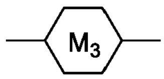

each independently represents

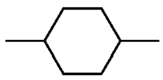 or 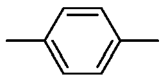,

wherein one or more $-CH_2-$ in

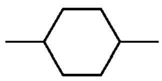

can be replaced by -O-, wherein at most one -H on

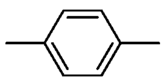

can be substituted by halogen, wherein when ring

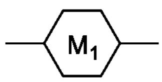

is

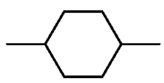,

$R_{M1}$ can further represent -CN, and when ring

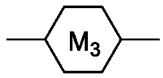

is

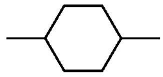

,

$R_{M2}$ can further represent -CN;

$Z_{M1}$ and $Z_{M2}$ each independently represents a single bond, -CO-O-, -O-CO-, -CHzO-, $-OCH_2-$, -CH=CH-, -C=C-, $-CH_2CH_2-$ or $-(CH_2)_4-$; and

$n_{M1}$ represents 0, 1, 2 or 3, and when $n_{M1}$ represents 2 or 3, ring

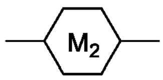

can be same or different, and $Z_{M2}$ can be same or different.

In some embodiments of the present invention, the compound of general formula M is selected form a group consisting of the following compounds:

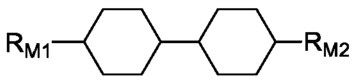

M1;

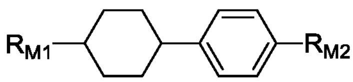

M2;

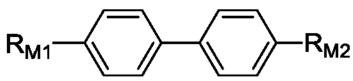

M3;

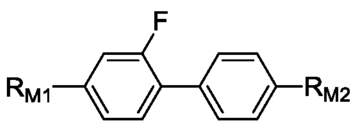

M4;

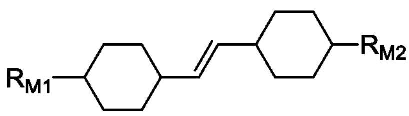

M5;

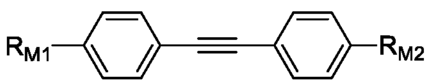

M6;

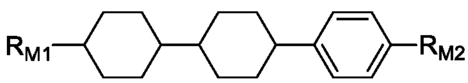

M7;

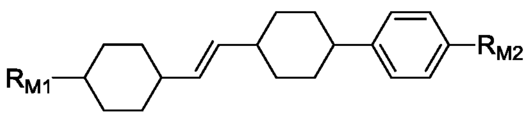

M8;

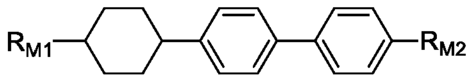
M9;

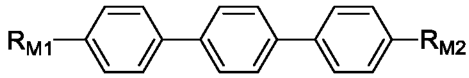
M10;

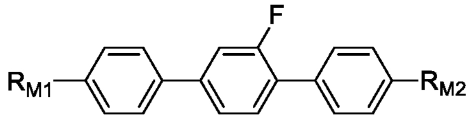
M11;

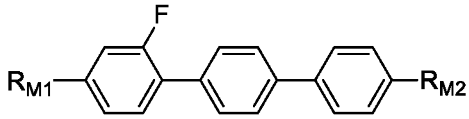
M12;

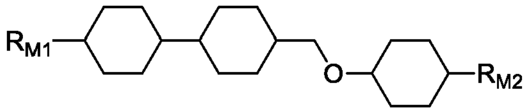
M13;

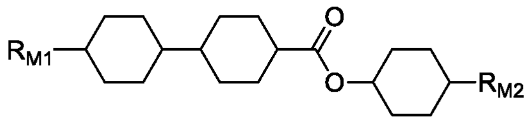
M14;

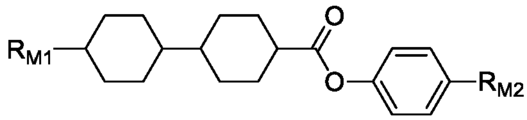
M15;

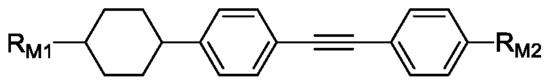
M16;

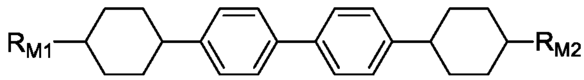
M17;

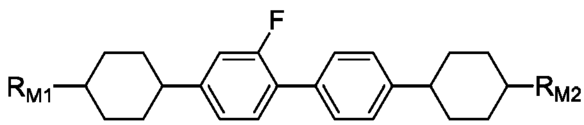
M18;

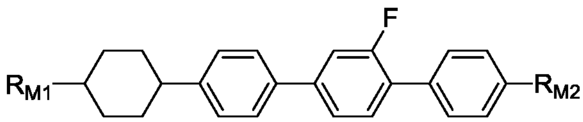
M19;

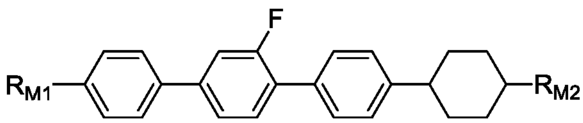
M20;

and

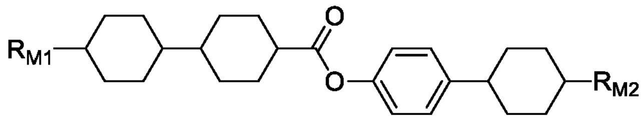

M21.

In some embodiments of the present invention, the compound of general formula M is preferably selected from a group consisting of the compounds of general formula M1, general formula M2, general formula M9, general formula M18 and general formula M21.

In some embodiments of the present invention, the compound of general formula M in which $R_{M1}$ and/or $R_{M2}$ contains a structure of -CH=CH- is in an amount of less than 5% of the total weight of the liquid crystal composition.

The liquid crystal composition comprises at least one compound of general formula A or at least one compound of general formula N:

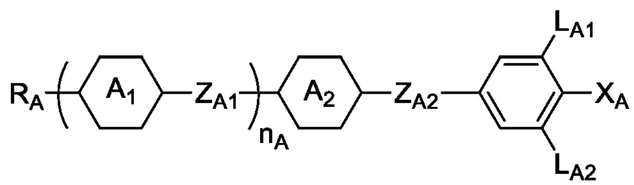

A;

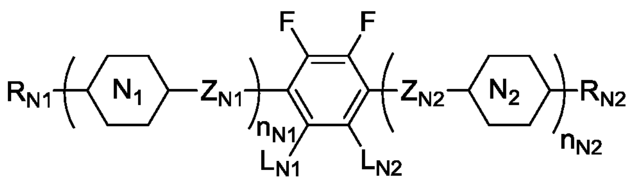

N,

in which,

$R_A$ represents a $C_{1-12}$ linear or branched alkyl,

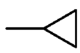, 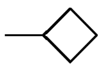 or 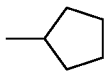,

one or more nonadjacent $-CH_2-$ in the $C_{1-12}$ linear or branched alkyl can each be independently replaced by -CH=CH-, -C=C-, -O-, -CO-, -CO-O- or -O-CO-, and one or more -H in the $C_{1-12}$ linear or branched alkyl,

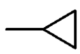, 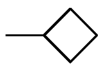 or 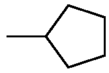

can each be independently substituted by-F or -Cl;

$R_{N1}$ and $R_{N2}$ each independently represents a $C_{1-12}$ linear or branched alkyl,

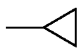,

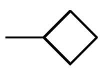 or 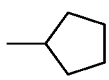,

one or more nonadjacent $-CH_2-$ in the $C_{1-12}$ linear or branched alkyl can each be independently replaced by -CH=CH-, -C=C-, -O-, -CO-, -CO-O- or -O-CO-;

ring

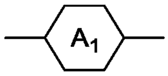

and ring

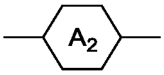

each independently represents

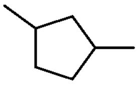,

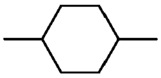, 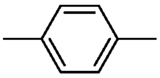 or 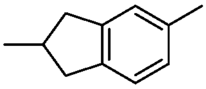,

wherein one or more $-CH_2-$ in

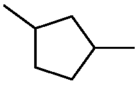, 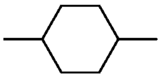 and 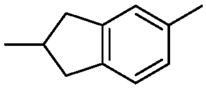

can be replaced by -O-, and one or more single bonds in the rings can be replaced by double bond, wherein one or more -H on

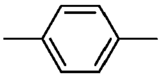 and 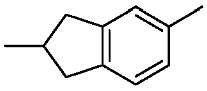

can be substituted by -CN, -F or -Cl, and one or more -CH= in the rings can be replaced by -N=;
ring

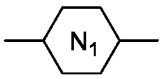

and ring

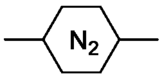

each independently represents

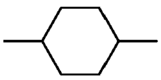 or 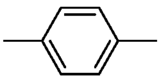,

wherein one or more $-CH_2-$ in

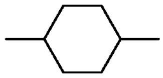

can be replaced by -O-, and one or more single bonds in the ring can be replaced by double bond, wherein one or more -H on

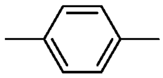

can be substituted by -CN, -F or -Cl, and one or more -CH= in the ring can be replaced by -N=;

$Z_{A1}$, $Z_{A2}$, $Z_{N1}$ and $Z_{N2}$ each independently represents a single bond, $-CH_2CH_2-$, $-(CH_2)_4-$, $-CF_2CF_2-$, $-CF_2O-$, $-OCF_2-$, -CO-O-, -O-CO-, -O-CO-O-, -CH=CH-, -C=C-, -CF=CF-, -CHzO- or $-OCH_2-$;

$L_{A1}$ and $L_{A2}$ each independently represents -H or -F;

$L_{N1}$ and $L_{N2}$ each independently represents -H or $-CH_3$;

$X_A$ represents halogen, -CN, a $C_{1-5}$ halogenated alkyl or halogenated alkoxy, a $C_{2-5}$ halogenated alkenyl or halogenated alkenoxy; and

$n_A$, $n_{N1}$ and $n_{N2}$ each independently represents 0, 1, 2 or 3, and $0 \leq n_{N1} + n_{N2} \leq 3$, and when $n_A$ represents 2 or 3, ring

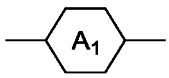

can be same or different, and $Z_{A1}$ can be same or different; when $n_{N1}$ represents 2 or 3, ring

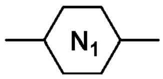

can be same or different, and $Z_{N1}$ can be same or different; when $n_{N2}$ represents 2 or 3, ring

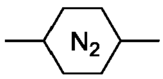

can be same or different, and $Z_{N2}$ can be same or different.

In some embodiments of the present invention, the compound of general formula A is selected form a group consisting of the following compounds:

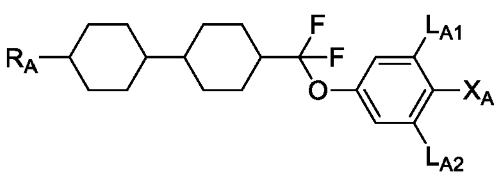

A-1;

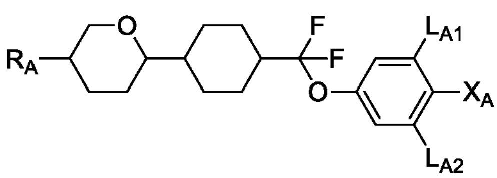

A-2;

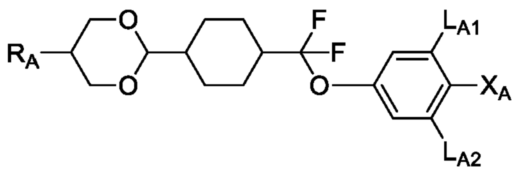

A-3;

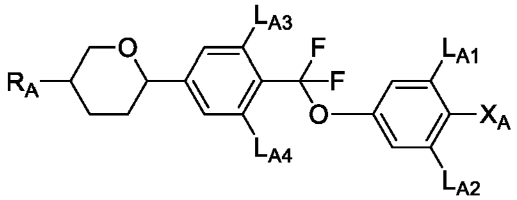

A-4;

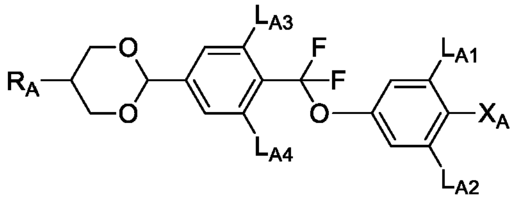

A-5;

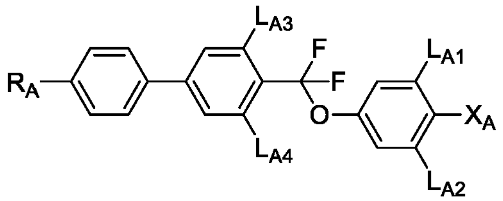

A-6;

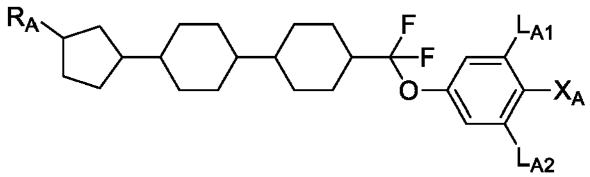

A-7;

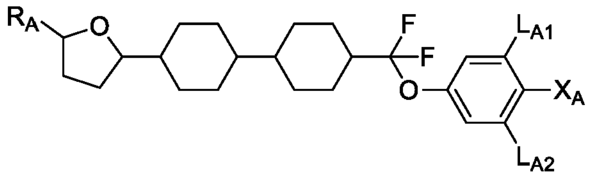

A-8;

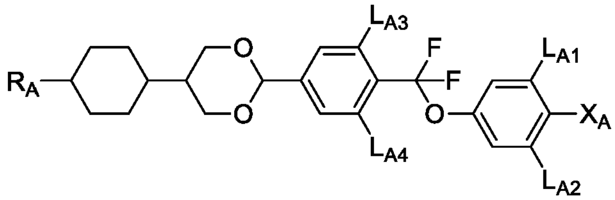

A-9;

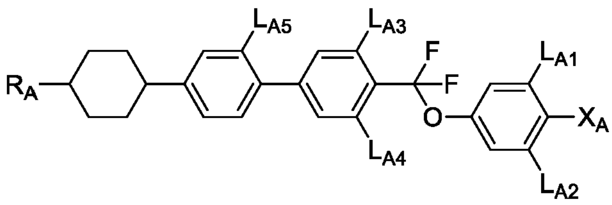
A-10;

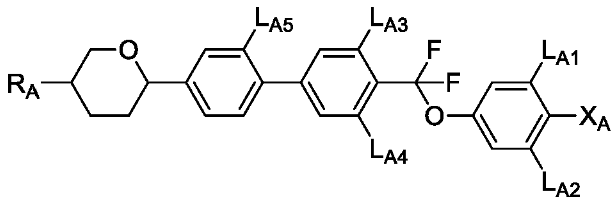
A-11;

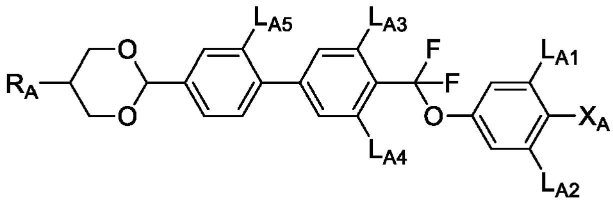
A-12;

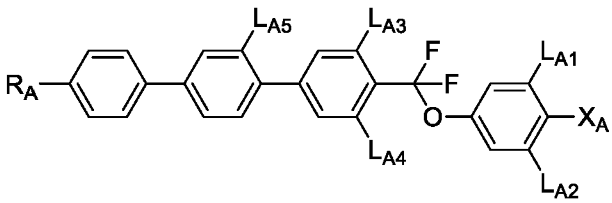
A-13;

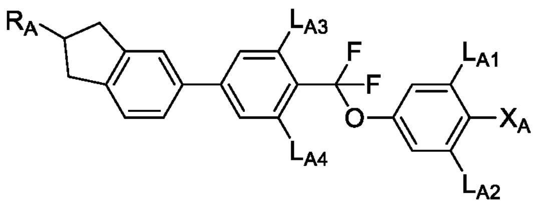
A-14;

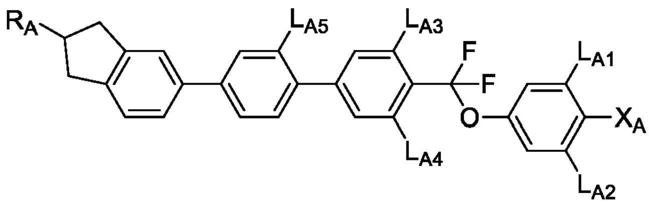
A-15;

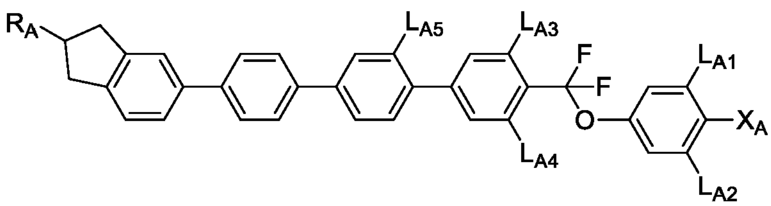
A-16;

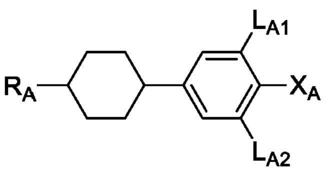

A-17;

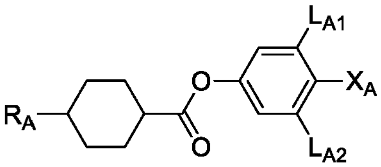

A-18;

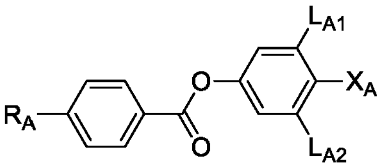

A-19;

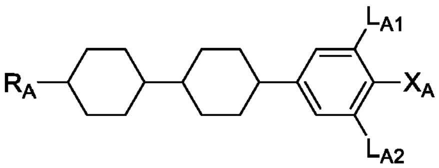

A-20;

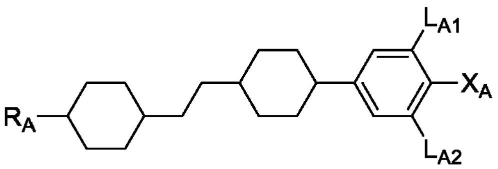

A-21;

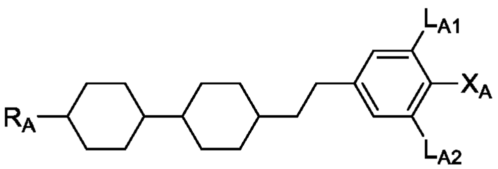

A-22;

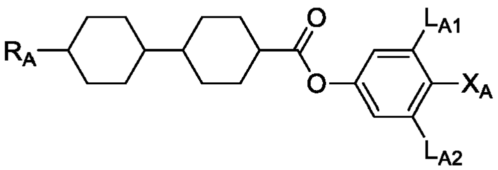

A-23;

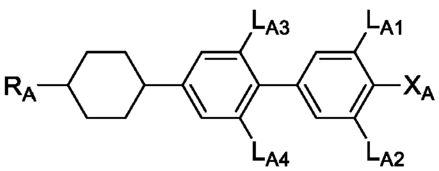

A-24;

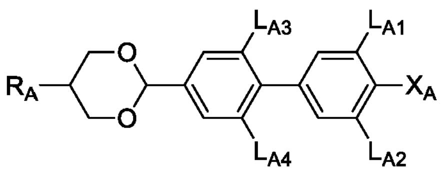

A-25;

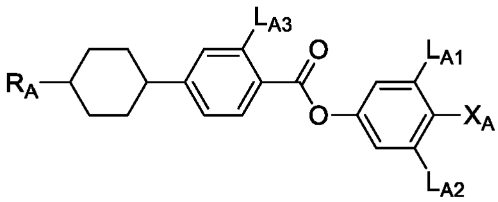

A-26;

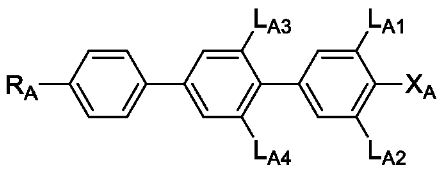

A-27;

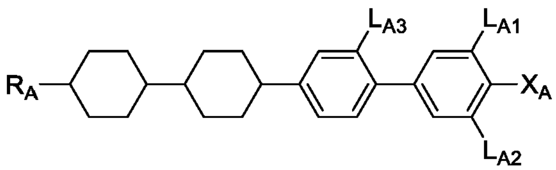

A-28;

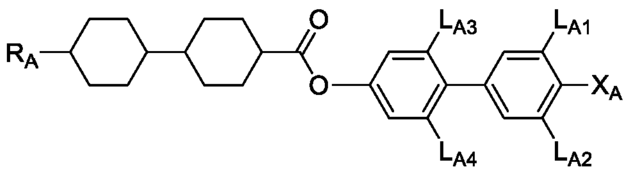

A-29;

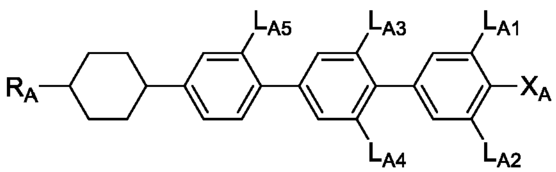

A-30;

and

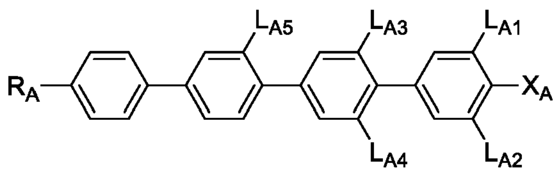

A-31,

in which,

$R_A$ represents a $C_{1-12}$ linear or branched alkyl or alkoxy,

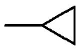, 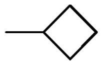 or 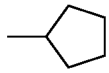;

$X_A$ represents -F, a $C_{1-5}$ fluorinated alkyl or fluorinated alkoxy, a $C_{2-5}$ fluorinated alkenyl or fluorinated alkenoxy; and $L_{A3}$, $L_{A4}$ and $L_{A5}$ each independently represents -H or -F.

In some embodiments of the present invention, the compound of general formula A is preferably selected from a group consisting of the compounds of general formula A-1, general formula A-6, general formula A-13, general formula A-20, general formula A-23, general formula A-24 and general formula A-28.

In some embodiments of the present invention, the compound of general formula N is selected form a group consisting of the following compounds:

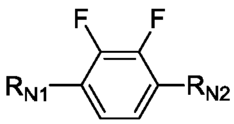

N1;

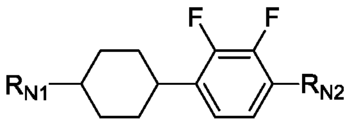

N2;

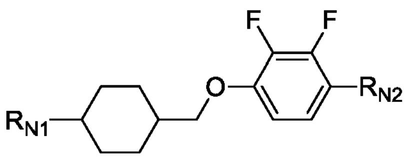

N3;

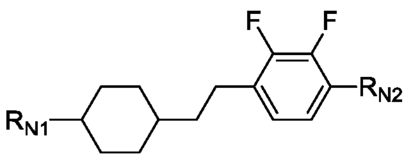

N4;

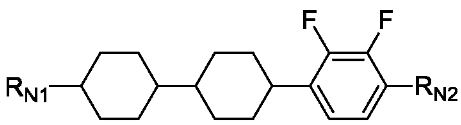

N5;

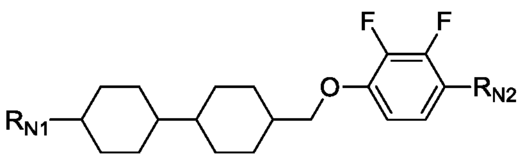

N6;

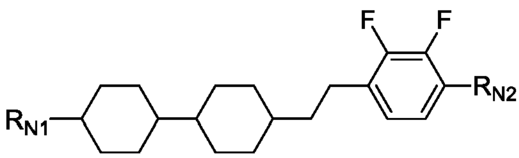

N7;

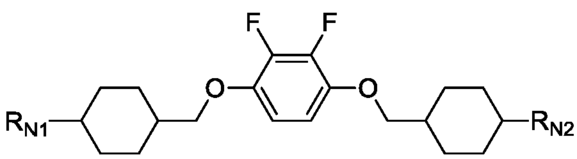

N8;

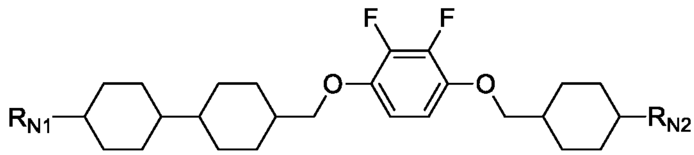

N9;

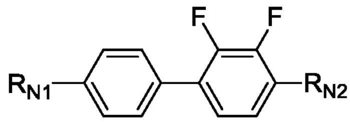

N10;

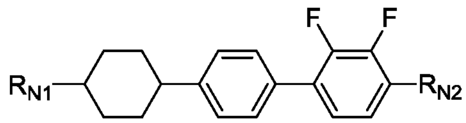

N11;

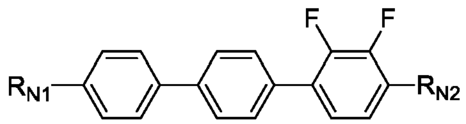

N12;

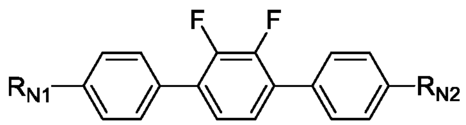

N13;

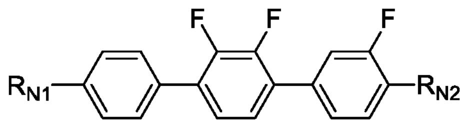

N14;

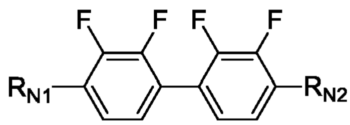

N15;

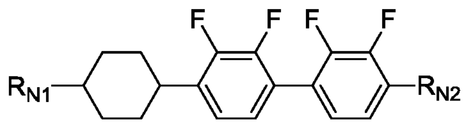

N16;

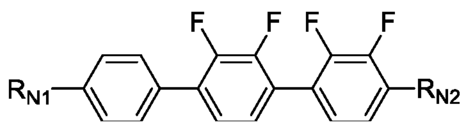

N17;

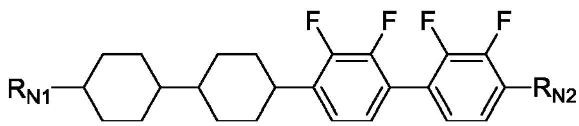

N18;

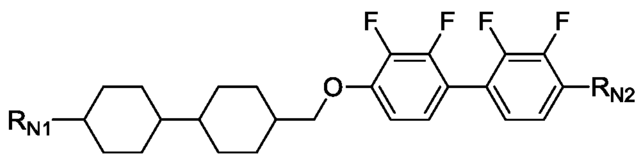

N19;

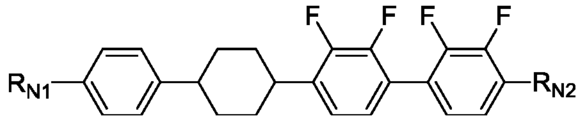

N20;

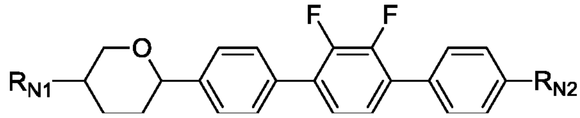

N21;

and

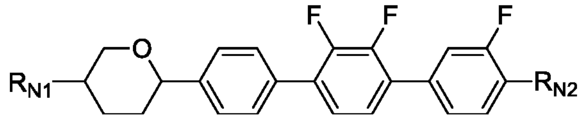

N22.

In some embodiments of the present invention, the compound of general formula N is preferably selected from a group consisting of the compounds of general formula N2, general formula N5 and general formula N11.

A -CN substituent-containing compound in the liquid crystal composition is in an amount of less than 10%, preferably less than 5%, of the total weight of the liquid crystal composition.

The liquid crystal composition comprises: one or more compounds of general formula M in an amount of 5-50% of the total weight of the liquid crystal composition, and one or more compounds of general formula A in an amount of 50-95% of the total weight of the liquid crystal composition, or one or more compounds of general formula M in an amount of 5-30% of the total weight of the liquid crystal composition, and one or more compounds of general formula N in an amount of 70-95% of the total weight of the liquid crystal composition.

In some embodiments of the present invention, the chiral dopant is selected form a group consisting of the following compounds:

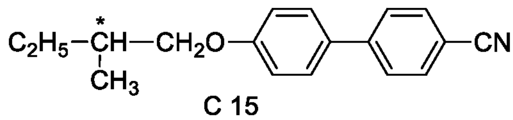

C 15 .

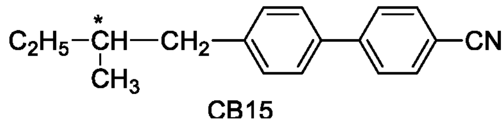

CB15 .

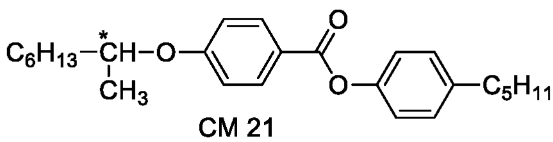

CM 21 .

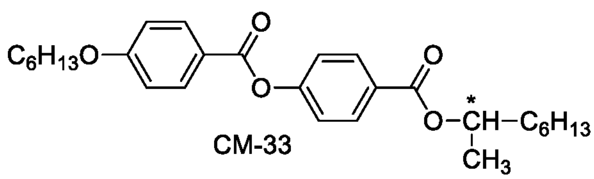

CM-33 ;

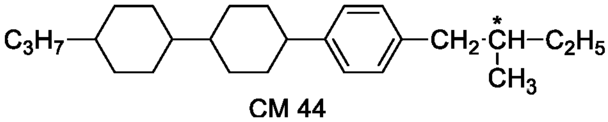

CM 44 .

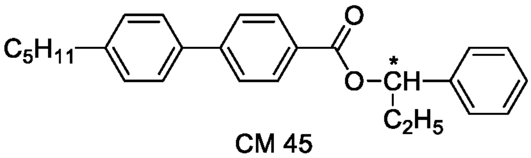

CM 45

.

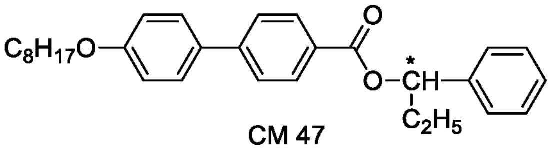

CM 47

.

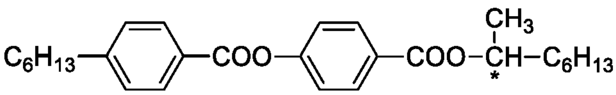

R-811/S-811

;

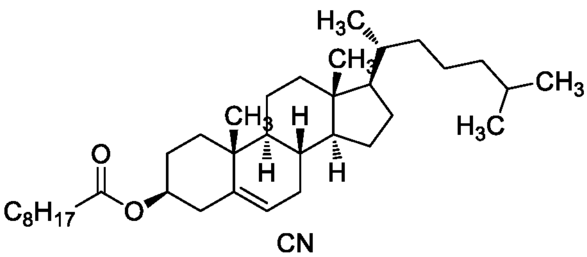

CN

;

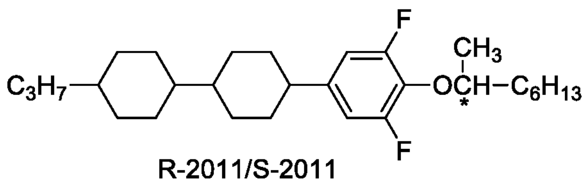

R-2011/S-2011

;

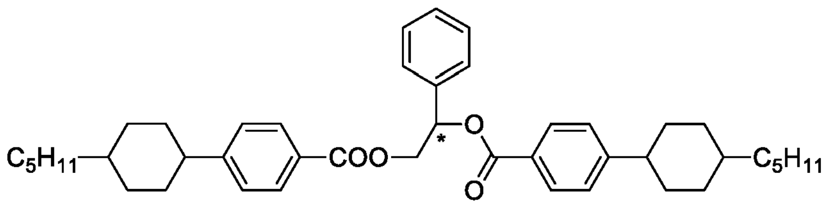

R-1011/S-1011

;

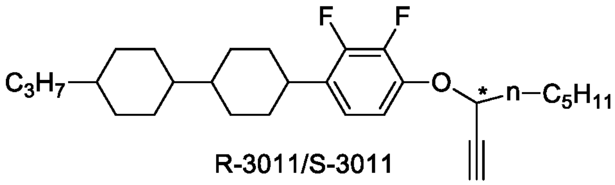

R-3011/S-3011

;

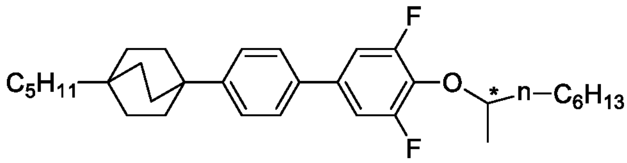

R/S 4011

;

and

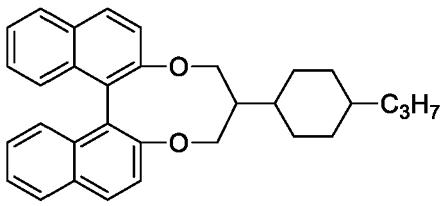

R-5011/S-5011

.

In some embodiments of the present invention, the dichroic dye in the dye-doped liquid crystal composition is selected from one or more in Table 1:

Table 1 Structure and maximum absorption wavelength of dye molecules

| Dye No. | Molecular Structure | $\lambda_{max}$ (nm) | Color |
|---|---|---|---|
| 1 | 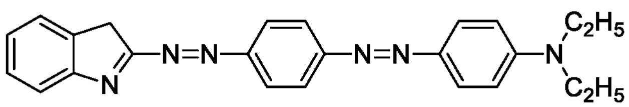 | 574 | purple |
| 2 | 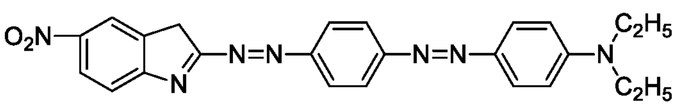 | 610 | blue-gre en |
| 3 | 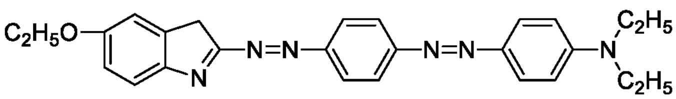 | 570 | purple |
| 4 | 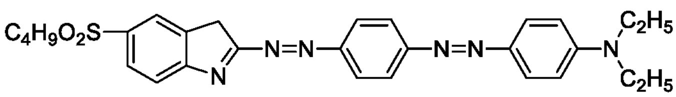 | 595 | blue-gre en |
| 5 | 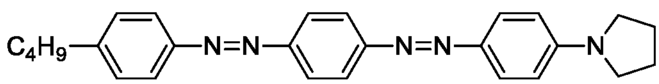 | 507 | purple-r ed |
| 6 | 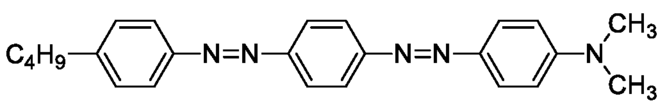 | 526-533 | purple-r ed |
| 7 | 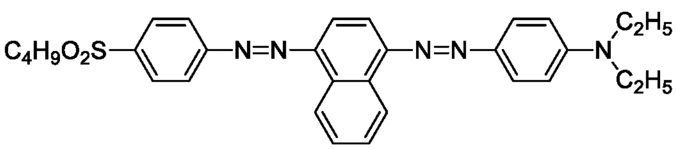 | 573 | purple |

(continued)

| Dye No. | Molecular Structure | $\lambda_{max}$ (nm) | Color |
|---|---|---|---|
| 8 | 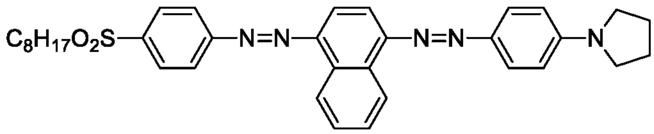 | 574 | purple |
| 9 | 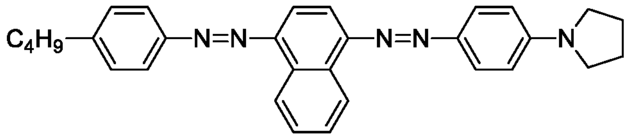 | 533-542 | purple-r ed |
| 10 | 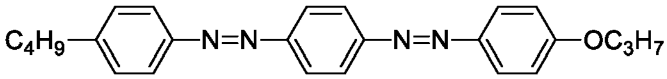 | 390-398 | yellow |
| 11 | 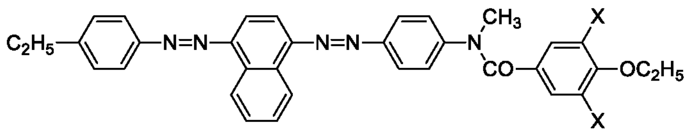 | 402 | yellow |
| 12 | 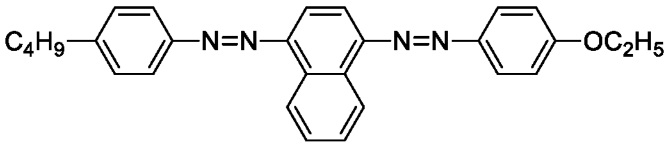 | 439-446 | orange-y ellow |
| 13 | 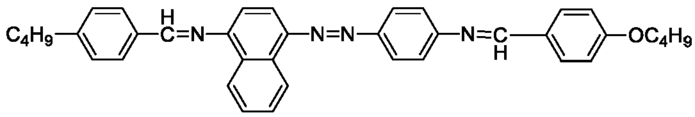 | 443-450 | orange-y ellow |
| 14 | 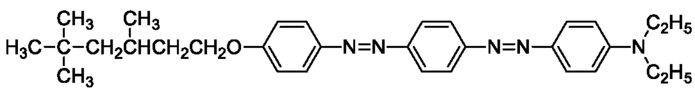 | 511 | red |
| 15 | 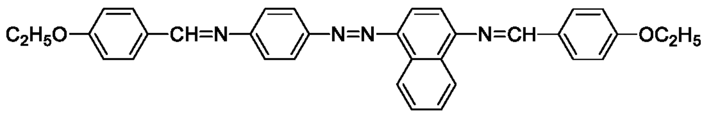 | 447 | orange-y ellow |
| 16 | 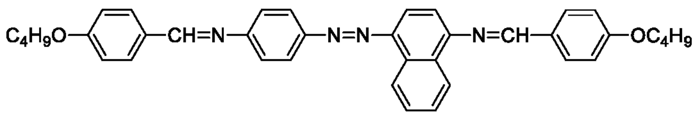 | 450 | orange-y ellow |
| 17 | 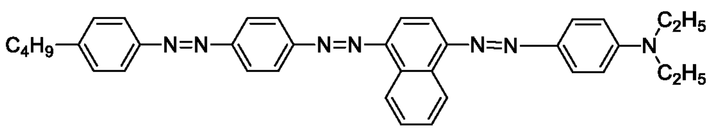 | 563-573 | purple-b lue |
| 18 | 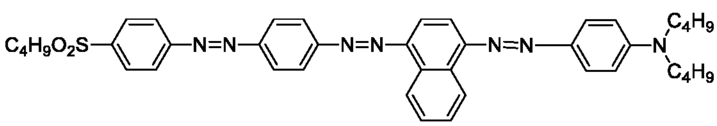 | 580-589 | blue-gre en |
| 19 | 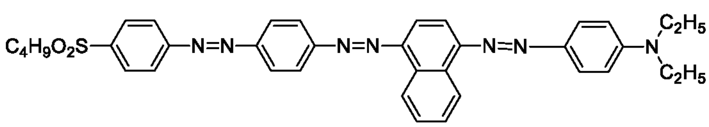 | 591-599 | blue-gre en |

(continued)

| Dye No. | Molecular Structure | $\lambda_{max}$ (nm) | Color |
|---|---|---|---|
| 20 | 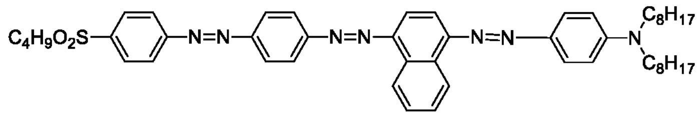 | 592-600 | blue-gre en |
| 21 | 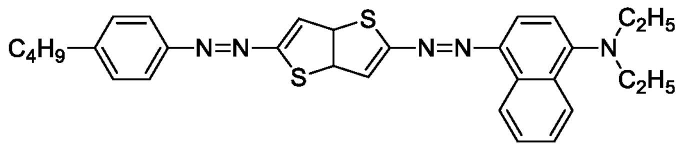 | 621-660 | blue |
| 22 | 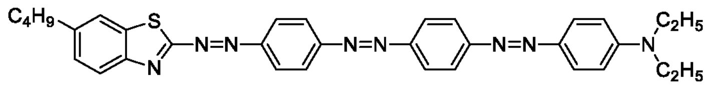 | 591-606 | blue-gre en |
| 23 | 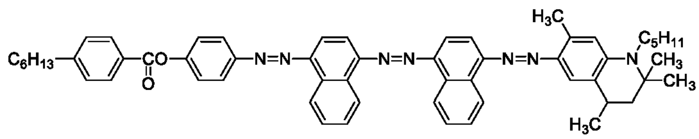 | 634-643 | blue |
| 24 | 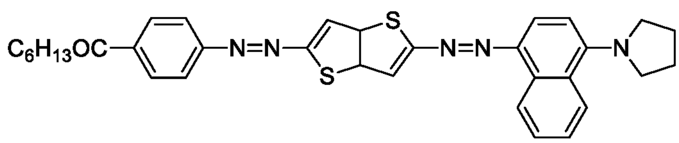 | 674 | blue |
| 25 | 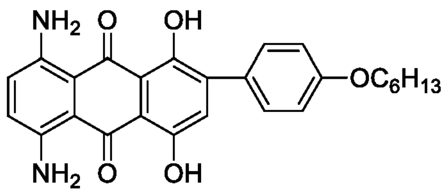 | 640 | blue |
| 26 | 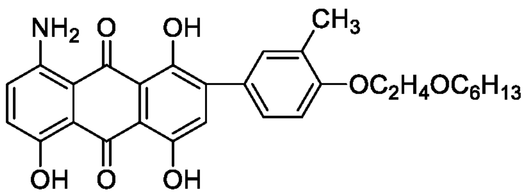 | 645 | blue |
| 27 | 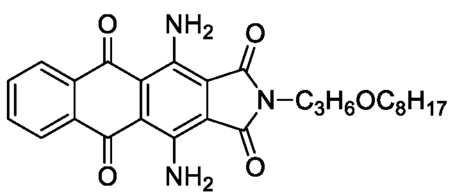 | 680 | blue |
| 28 | 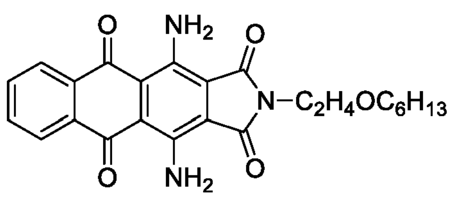 | 760 | blue |

(continued)

| Dye No. | Molecular Structure | $\lambda_{max}$ (nm) | Color |
|---|---|---|---|
| 29 | 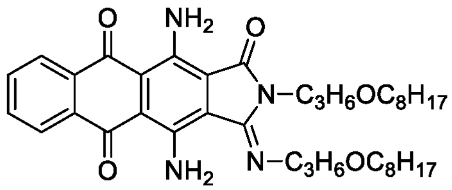 | 670 | blue |
| 30 | 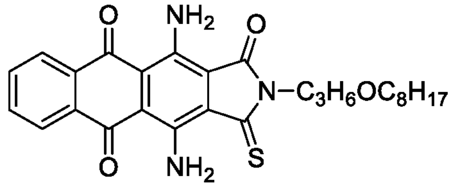 | 760 | blue |
| 31 | 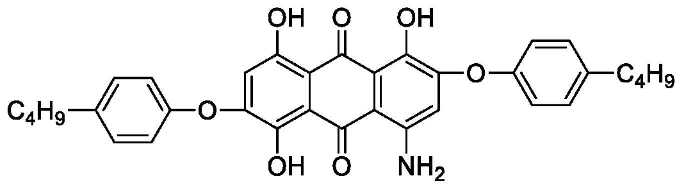 | 595 | blue-gre en |
| 32 | 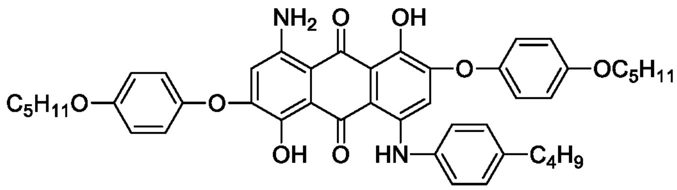 | 630 | blue |
| 33 | 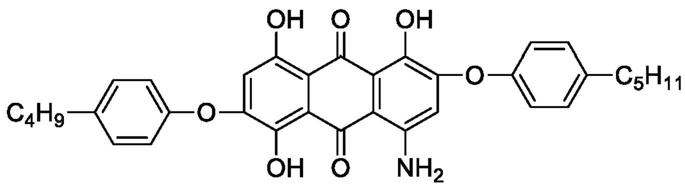 | 595 | blue-gre en |
| 34 | 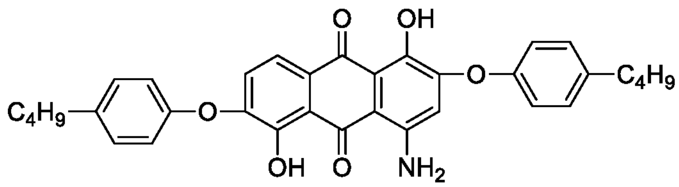 | 535 | purple-r ed |
| 35 | 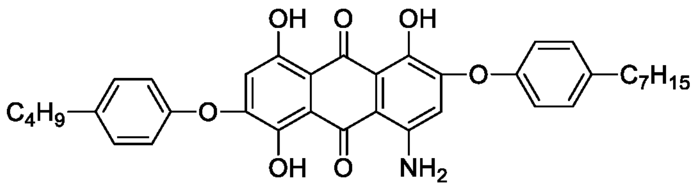 | 595 | blue-gre en |

In some embodiments of the present invention, the dichroic dye is one or more of an orange-yellow dichroic dye, a purple dichroic dye, a red dichroic dye, a purple-red dichroic dye and a blue dichroic dye, and the dichroic dye is in an amount of 1.5-6%, preferably 2-6%, of the total weight of the dye-doped liquid crystal composition.

In some embodiments of the present invention, the dye-doped liquid crystal composition layer has a thickness of 3-25 μm.

In some embodiments of the present invention, when the liquid crystal composition has a positive dielectric

anisotropy, the dye-doped liquid crystal composition has a twist angle between 180°-1440°, and the percentage of the chiral dopant in the dye-doped liquid crystal composition to the total weight of the dye-doped liquid crystal composition is between 0.5/(d×HTP) - 4/(d×HTP), wherein d is thickness of the dye-doped liquid crystal composition layer, and HTP is Helical Twisting Power Constant of liquid crystal.

In some embodiments of the present invention, when the liquid crystal composition has a negative dielectric anisotropy, the dye-doped liquid crystal composition has a twist angle between 90°-360°, and the percentage of the chiral dopant in the dye-doped liquid crystal composition to the total weight of the dye-doped liquid crystal composition is between 1/(4d×HTP) - 1/(d×HTP), wherein d is thickness of the dye-doped liquid crystal composition layer, and HTP is Helical Twisting Power Constant of liquid crystal.

If the amount of chiral dopants is too low, a dark state of the reflective liquid crystal display device comprising the dye-doped liquid crystal composition is prone to be higher, thereby causing low contrast. If the amount of chiral dopants is too high, it is prone to cause display defects, such as moire pattern or colored fringes, in the reflective liquid crystal display device comprising the dye-doped liquid crystal composition during applying and removing the voltage and when applying the maximum voltage.

Beneficial effects:

In the reflective liquid crystal display device comprising the dye-doped liquid crystal composition provided by the present invention, the improvements in the orderness of the liquid crystal composition allows for a more orderly alignment of dye molecules and higher contrast of the reflective liquid crystal display device. Furthermore, the addition of chiral dopant and further optimization of the amount of the chiral dopant allows for lower dark state, better bright state and higher contrast, and overcomes the shortcomings of conventional reflective display devices, such as an increased costs caused by the requirements for polarizers, brightness enhancement films and phase retarders, and poor viewing angle characteristics. The combination of the chiral dopants, the dichroic dyes and the liquid crystal composition used in the present invention is better compatible with the cell gap and rubbing direction of the reflective liquid crystal display device, such that the reflective liquid crystal display device further has higher contrast, wider viewing angle and wider operating temperature range, and avoids problems such as high driving voltage during driving, disclination of alignment of liquid crystal molecules in the intermediate state when applying a voltage, and delays in response time. The reflective liquid crystal display device comprising the dye-doped liquid crystal composition of the present invention is not subject to any requirement as to color of dichroic dyes and the reflective layer, and has a wider application range. Through further optimizing the components of the liquid crystal composition to reduce the use of cyano-containing polar monomers and olefinic bond-containing neutral monomers, the dyes have a further improved solubility in the liquid crystal composition, thereby further improving the contrast of reflective devices, and the resultant dye-doped liquid crystal composition has better low-temperature stability and is applicable to a wider operating temperature range. Moreover, a reflective display device which has higher contrast and no disclination in the intermediate state when applying a voltage can be achieved, once the addition amount of chiral dopants satisfies a certain relationship.

## BRIEF DESCRIPTION OF THE DRAWINGS

Fig. 1 is a working schematic diagram of a reflective display device comprising a dye-doped liquid crystal composition with positive dielectric anisotropy;
Fig. 2 is a working schematic diagram of a reflective display device comprising a dye-doped liquid crystal composition with negative dielectric anisotropy;
Fig. 3 is a diagram showing the display effects from a front viewing angle (a) and a side viewing angle (b) of a conventional TN-type reflective liquid crystal device;
Fig. 4 is a diagram showing the display effects from a front viewing angle (a) and a side viewing angle (b) of the reflective liquid crystal device comprising dye-doped liquid crystal composition with a twist angle of 270° in Example 1;
Fig. 5 is a diagram showing the display effects from a front viewing angle (a) and a side viewing angle (b) of the reflective liquid crystal device comprising dye-doped liquid crystal composition with a twist angle of 1050° in Example 3;
Fig. 6 is an image observed with a microscope after applying a voltage of 3 V to the display device of Example 1; and
Fig. 7 is an image observed with a microscope after applying a voltage of 3 V to the display device of Example 8.

## DETAILED EMBODIMENTS

The present invention will be illustrated by combining the detailed embodiments below.

It should be noted that, the following Examples are exemplary embodiments of the present invention, which are only used to illustrate the present invention, not to limit it. Other combinations and various modifications within the conception of the present invention are possible without departing from the subject matter and scope of the present invention as defined in the appended claims.

For the convenience of the expression, the group structures of the liquid crystal compounds in the following Examples are represented by the codes listed in Table 2:

Table 2. Codes of the group structures of the liquid crystal compounds

| Unit structure of group | Code | Name of the group |
|---|---|---|
| 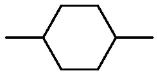 | C | 1,4-cyclohexylidene |
| 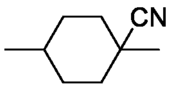 | C(N) | 1 -cyano-1,4-cyclohexylidene |
| 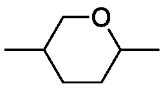 | A | 1-oxane-2,5-diyl |
| 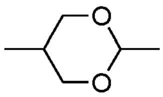 | D | 1,3-dioxane-2,5-diyl |
| 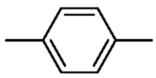 | P | 1,4-phenylene |
| 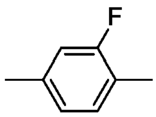 | G | 2-fluoro-1,4-phenylene |
| 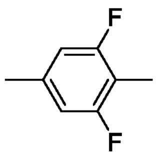 | U | 2,5-difluoro-1,4-phenylene |
| 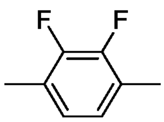 | W | 2,3-difluoro-1,4-phenylene |
| $-CH_2CH_2-$ | 2 | ethyl bridge bond |
| $-OCF_3$ | OCF3 | trifluoromethoxy |
| -F | F | fluoro substituent |
| -CN | N | cyano |
| -O- | O | oxygen substituent |
| $-CF_2O-$ | 1(2F)O or Q | difluoromethoxy |
| $-CH_2O-$ | 10 | methyleneoxy |
| -COO- | E | ester bridge bond |
| $-C_nH_{2n+1}$ | n (n represents a positive integer of 1-12) | alkyl |
| -CH=CH- or $-CH=CH_2$ | V | ethenyl |
| -C=C- | T | alkynyl |

Taking the compound with the following structural formula as an example:

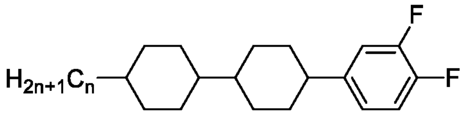

Represented by the codes listed in Table 2, this structural formula can be expressed as nCCGF, in which, n in the code represents the number of the carbon atoms of the alkyl group on the left, for example, n is "3", meaning that the alkyl is $-C_3H_7$; C in the code represents cyclohexyl, G represents 2-fluoro-1,4-phenylene, and F represents fluorine.

The abbreviated codes and test conditions of the test items in the following Examples are represented as follows:

| | |
|---|---|
| Cp | clearing point (nematic-isotropy phases transition temperature, °C) |
| $\Delta n$ | optical anisotropy (589 nm, 25°C) |
| $\Delta\varepsilon$ | dielectric constant anisotropy (1 KHz, 25°C) |
| $K_{22}$ | twist elastic constant |
| $K_{33}$ | bend elastic constant |
| CR | contrast |
| HTP | Helical Twisting Power Constant of liquid crystal |
| $R_{on}$ | reflectivity in a bright state |
| $R_{off}$ | reflectivity in a dark state |
| $t_{-30^\circ C}$ | storage time at low temperature (day, at -30°C) |

in which,

The optical anisotropy is measured with an Abbe refractometer under sodium lamp (589 nm) light source at 25°C.

$\Delta\varepsilon=\varepsilon_{\parallel}-\varepsilon_{\perp}$, in which, $\varepsilon_{\parallel}$ is a dielectric constant parallel to the molecular axis, $\varepsilon_{\perp}$ is a dielectric constant perpendicular to the molecular axis, with the test conditions: 25°C, 1 KHz, TN-type test cell with a cell gap of 7 $\mu$m.

$K_{22}$ and $K_{33}$ are calculated from the measured C-V curve of the liquid crystal using LCR meter and an antiparallel rubbed cell or a negative cell, with the following test conditions: an antiparallel rubbed cell with a cell gap of 7 $\mu$m, V = 0.1-20 V.

HTP = 1/(c×Pitch), wherein c is the amount of chiral dopants, and Pitch is the value of the pitch of liquid crystals, which is tested at 25°C using a reading microscope and a wedge cell.

Test conditions for $R_{on}$ and $R_{off}$ of a reflective display device comprising a dye-doped liquid crystal composition with positive dielectric anisotropy: a DMS 505 LCD photoelectric tester is used to apply a square wave which has frequency of 60 Hz and increases from 0 V to 15 V in a step of 0.01 V to a reflective device so as to obtain a curve showing the change of reflectivity over voltage, wherein the reflectivity at 0 V is denoted as $R_{off}$, the reflectivity at 15 V is denoted as $R_{on}$, and the cell gap of dimming device is shown in the specific Examples below.

Test conditions for $R_{on}$ and $R_{off}$ of a reflective display device comprising a dye-doped liquid crystal composition with negative dielectric anisotropy: a DMS 505 LCD photoelectric tester is used to apply a square wave which has frequency of 60 Hz and increases from 0 V to 10 V in a step of 0.01 V to a reflective device so as to obtain a curve showing the change of reflectivity over voltage, wherein the reflectivity at 0 V is denoted as $R_{on}$, the reflectivity at 10 V is denoted as $R_{off}$, and the cell gap of dimming device is shown in the specific Examples below.

$$CR = R_{on}/R_{off}.$$

$t_{-30^\circ C}$: The dye-doped liquid crystal composition mixed by the liquid crystal composition, dyes and chiral dopants is filled into a test cell, and stored at -30°C. The dye precipitation is observed with a microscope, and it is deemed as a qualified low-temperature characteristic if there is no dye precipitation for ≥7 days.

The components used in the following Examples can either be synthesized by method known in the art or be obtained commercially. The synthetic techniques are conventional, and each of the obtained liquid crystal compounds is tested to meet the standards of electronic compound. The black dye used in the following Comparative Examples and Examples is prepared by mixing the dichroic dyes Nos. 9, 13 and 23 in Table 1 at a mass ratio of 3: 2: 13.

The liquid crystal compositions are prepared in accordance with the ratios specified in the following Examples through conventional methods in the art, such as heating, ultrasonic wave, or suspension.

The liquid crystal media in following Examples are prepared and then tested. The components and test results for the performances of the liquid crystal composition of each Example are shown below.

**Comparative Example 1**

The liquid crystal composition of Comparative Example 1 is prepared according to each compound and weight percentage listed in Table 3 and then tested for performance by filling the same between two substrates of a liquid crystal display device. The test data is shown in the Table below:

Table 3 Formulation and test results for the performance parameters of the liquid crystal composition

| Code of component | Weight percentage | Test results for the performance parameters | |
|---|---|---|---|
| 3CCEWO2 | 8 | Cp | 96 |
| 3CEWO1 | 19 | $\Delta\varepsilon$ | -8.4 |
| 3CCEW1 | 7 | $\Delta n$ | 0.096 |
| 3CC(N)5 | 8 | $K_{33}/K_{22}$ | 1.64 |
| 3CWO2 | 7 | HTP (after the addition of S-811) | 11.0 |
| 2CPWO2 | 5 | $t_{-30°C}$ | ≥ 7 days |
| 3CPWO2 | 5 | | |
| 3CWO4 | 8 | | |
| 5CWO4 | 8 | | |
| 3CCWO2 | 7 | | |
| 5CCWO2 | 6 | | |
| 4CCWO2 | 6 | | |
| 3CCWO3 | 6 | | |
| Total | 100 | | |

The liquid crystal composition prepared according to Table 3 is mixed with a dichroic dye and a chiral dopant according to the weight percentages in Table 4 to obtain a dye-doped liquid crystal composition in which the liquid crystal molecules have a twist angle of 270°. The reflectivity of the reflective liquid crystal display device comprising the dye-doped liquid crystal composition with a cell gap of 6 μm is tested to obtain $R_{on}$ and $R_{off}$, and the contrast CR is calculated. The results are shown in Table 4.

Table 4

| Component | Weight percentage | Test results for the performance parameters | |
|---|---|---|---|
| Liquid crystal composition of Comparative Example 1 | 96.46 | $R_{off}$ | 21.4 |
| Black dye | 2.5 | $R_{on}$ | 52.0 |
| S-811 | 1.04 | CR | 2.4 |
| Total | 100 | $t_{-30°C}$ | ≤ 3 days |

**Comparative Example 2**

The liquid crystal composition of Comparative Example 2 is prepared according to each compound and weight percentage listed in Table 5 and then tested for performance by filling the same between two substrates of a liquid crystal display device. The test data is shown in the Table below:

Table 5 Formulation and test results for the performance parameters of the liquid crystal composition

| Code of component | Weight percentage | Test results for the performance parameters | |
|---|---|---|---|
| 3CCEPC4 | 4 | Cp | 114 |

(continued)

| Code of component | Weight percentage | Test results for the performance parameters | |
|---|---|---|---|
| 3CCEPC3 | 5 | $\Delta\varepsilon$ | 5.6 |
| 3CCEPC5 | 4 | $\Delta n$ | 0.172 |
| 2PEGN | 2 | $K_{33}/K_{22}$ | 1.7 |
| 3PEGN | 3 | HTP (after the addition of S-811) | 11.4 |
| 4PEGN | 3 | $t_{-30°C}$ | ≥7 days |
| 5PEGN | 3 | | |
| 2UTPP3 | 18 | | |
| 4UTPP3 | 10 | | |
| 3CPO2 | 20 | | |
| 3CGPC3 | 2 | | |
| VCCP1 | 6 | | |
| 5CCV | 20 | | |
| Total | 100 | | |

The liquid crystal composition prepared according to Table 5 is mixed with a dichroic dye and a chiral dopant according to the weight percentages in Table 6 to obtain a dye-doped liquid crystal composition in which the liquid crystal molecules have a twist angle of 720°. The reflectivity of the reflective liquid crystal display device comprising the dye-doped liquid crystal composition with a cell gap of 7 μm is tested to obtain $R_{off}$ and $R_{on}$, and the contrast CR is calculated. The results are shown in Table 6.

Table 6

| Component | Weight percentage | Test results for the performance parameters | |
|---|---|---|---|
| Liquid crystal composition of Comparative Example 2 | 94 | $R_{off}$ | 13.0 |
| Black dye | 3.5 | $R_{on}$ | 51.0 |
| S-811 | 2.5 | CR | 3.9 |
| Total | 100 | $t_{-30°C}$ | ≤ 1 day |

**Comparative Example 3**

The liquid crystal composition of Comparative Example 3 is prepared according to each compound and weight percentage listed in Table 7 and then tested for performance by filling the same between two substrates of a liquid crystal display device. The test data is shown in the Table below:

Table 7 Formulation and test results for the performance parameters of the liquid crystal composition

| Code of component | Weight percentage | Test results for the performance parameters | |
|---|---|---|---|
| 3CCEPC4 | 4 | Cp | 113 |
| 3CCEPC3 | 5 | $\Delta\varepsilon$ | 4.4 |
| 3CCEPC5 | 4 | $\Delta n$ | 0.169 |
| 3CPUF | 3 | $K_{33}/K_{22}$ | 1.70 |
| 5CPUF | 3 | HTP(after the addition of S-811) | 11.0 |
| 4PEGN | 3 | $t_{-30°C}$ | ≥ 7 days |

(continued)

| Code of component | Weight percentage | Test results for the performance parameters | |
|---|---|---|---|
| 5PEGN | 2 | | |
| 2UTPP3 | 18 | | |
| 4UTPP3 | 10 | | |
| 3CPO2 | 20 | | |
| 3CGPC3 | 2 | | |
| VCCP1 | 4 | | |
| 5CCV | 10 | | |
| 4CC3 | 12 | | |
| Total | 100 | | |

The liquid crystal composition prepared according to Table 7 is mixed with a dichroic dye and a chiral dopant according to the weight percentages in Table 8 to obtain a dye-doped liquid crystal composition in which the liquid crystal molecules have a twist angle of 720°. The reflectivity of the reflective liquid crystal display device comprising the dye-doped liquid crystal composition with a cell gap of 7 $\mu$m is tested to obtain $R_{off}$ and $R_{on}$, and the contrast CR is calculated. The results are shown in Table 8.

Table 8

| Component | Weight percentage | Test results for the performance parameters | |
|---|---|---|---|
| Liquid crystal composition of Comparative Example 3 | 93.9 | $R_{off}$ | 7.1 |
| Black dye | 3.5 | $R_{on}$ | 52.4 |
| S-811 | 2.6 | CR | 7.4 |
| Total | 100 | $t_{-30°C}$ | ≤ 4 days |

**Example 1**

The liquid crystal composition of Example 1 is prepared according to each compound and weight percentage listed in Table 9 and then tested for performance by filling the same between two substrates of a liquid crystal display device. The test data is shown in the Table below:

Table 9 Formulation and test results for the performance parameters of the liquid crystal composition

| Code of component | Weight percentage | Test results for the performance parameters | |
|---|---|---|---|
| 3CCEPC2 | 4 | Cp | 126 |
| 3CCEPC4 | 4 | $\Delta\varepsilon$ | -5.8 |
| 3CCEPC3 | 6 | $\Delta n$ | 0.099 |
| 3CCEPC5 | 4 | $K_{33}/K_{22}$ | 2.27 |
| 3CWO2 | 16 | HTP (after the addition of S-811) | 10.3 |
| 5CWO2 | 7.5 | $t_{-30°C}$ | ≥ 7 days |
| 2CPWO2 | 5.5 | | |
| 3CWO4 | 15 | | |
| 3CCWO2 | 10 | | |
| 5CCWO2 | 10 | | |

(continued)

| Code of component | Weight percentage | Test results for the performance parameters | |
|---|---|---|---|
| 4CCWO2 | 9 | | |
| 3CCWO3 | 9 | | |
| Total | 100 | | |

The liquid crystal composition prepared according to Table 9 is mixed with a dichroic dye and a chiral dopant according to the weight percentages in Tables 10-12 to obtain the dye-doped liquid crystal compositions in which the liquid crystal molecules have a twist angle of 270°, 300° and 260°, respectively. The reflective liquid crystal display devices comprising the dye-doped liquid crystal compositions with a cell gap of 6 μm, 4 μm and 5.8 μm are tested to obtain $R_{off}$ and $R_{on}$, and the contrast CR is calculated. The results are shown in Tables 10-12. The comparison of the display effects from a front viewing angle and a side viewing angle of the reflective liquid crystal device comprising the liquid crystal composition with a twist angle of 270° is shown in Fig. 4. When observing with a microscope, it is found that there is no disclination line in the display device in the intermediate state when applying a voltage (as shown in Fig. 6).

Table 10

| Component | Weight percentage | Test results for the performance parameters | |
|---|---|---|---|
| Liquid crystal composition of Example 1 | 95.79 | $R_{off}$ | 4.0 |
| Black dye | 3 | $R_{on}$ | 48.3 |
| S-811 | 1.21 | CR | 12.1 |
| Total | 100 | $t_{-30°C}$ | ≥7 days |

Table 11

| Component | Weight percentage | Test results for the performance parameters | |
|---|---|---|---|
| Liquid crystal composition of Example 1 | 94 | $R_{off}$ | 5.2 |
| Black dye | 4 | $R_{on}$ | 54.7 |
| S-811 | 2 | CR | 10.5 |
| Total | 100 | $t_{-30°C}$ | ≥7 days |

Table 12

| Component | Weight percentage | Test results for the performance parameters | |
|---|---|---|---|
| Liquid crystal composition of Example 1 | 96.3 | $R_{off}$* | 4.6 |
| Blue dye ($\lambda_{max}$ = 630 nm) | 2.5 | $R_{on}$* | 51.3 |
| S-811 | 1.2 | CR* | 11.2 |
| Total | 100 | $t_{-30°C}$ | ≥7 days |
| * represents a measurement value at the wavelength of $\lambda_{max}$. | | | |

As can be seen from the comparison between Fig. 3 and Fig. 4, the reflective liquid crystal display device provided by the present invention has higher contrast and wider viewing angle.

**Example 2**

The liquid crystal composition of Example 2 is prepared according to each compound and weight percentage

listed in Table 13 and then tested for performance by filling the same between two substrates of a liquid crystal display device. The test data is shown in the Table below:

Table 13 Formulation and test results for the performance parameters of the liquid crystal composition

| Code of component | Weight percentage | Test results for the performance parameters | |
|---|---|---|---|
| 3CCEPC2 | 3 | Cp | 108 |
| 3CCEPC5 | 5 | $\Delta\varepsilon$ | -6.7 |
| 3CWO2 | 15.5 | $\Delta n$ | 0.105 |
| 5CWO2 | 8 | $K_{33}/K_{22}$ | 2.46 |
| 2CPWO2 | 5 | HTP (after the addition of S-811) | 12.2 |
| 3CPWO4 | 6 | HTP (after the addition of CB15) | 9.7 |
| 3CWO4 | 15 | $t_{-30°C}$ | ≥ 7 days |
| 4CPWO3 | 4.5 | | |
| 3CCWO2 | 10 | | |
| 5CCWO2 | 9 | | |
| 4CCWO2 | 10 | | |
| 3CCWO3 | 9 | | |
| Total | 100 | | |

The liquid crystal composition prepared according to Table 13 is mixed with a dichroic dye and a chiral dopant according to the weight percentages in Tables 14-15 to obtain the dye-doped liquid crystal compositions in which the liquid crystal molecules have a twist angle of 220° and 270°, respectively. The reflective liquid crystal display devices comprising the dye-doped liquid crystal compositions with a cell gap of 4 μm and 6 μm are tested to obtain $R_{off}$ and $R_{on}$, and the contrast CR is calculated. The results are shown in Tables 14-15.

Table 14

| Component | Weight percentage | Test results for the performance parameters | |
|---|---|---|---|
| Liquid crystal composition of Example 2 | 94.55 | $R_{off}$ | 4.6 |
| black dye | 4.2 | $R_{on}$ | 50.7 |
| S-811 | 1.25 | CR | 11.0 |
| Total | 100 | $t_{-30°C}$ | ≥ 7 days |

Table 15

| Component | Weight percentage | Test results for the performance parameters | |
|---|---|---|---|
| Liquid crystal composition of Example 2 | 96.7 | $R_{off}$* | 2.4 |
| purple dye ($\lambda_{max}$ =6 30 nm) | 2 | $R_{on}$* | 42.7 |
| CB 15 | 1.3 | CR* | 17.8 |
| Total | 100 | $t_{-30°C}$ | ≥ 7 days |

**Example 3**

The liquid crystal composition of Example 3 is prepared according to each compound and weight percentage listed in Table 16 and then tested for performance by filling the same between two substrates of a liquid crystal display

device. The test data is shown in the Table below:

Table 16 Formulation and test results for the performance parameters of the liquid crystal composition

| Code of component | Weight percentage | Test results for the performance parameters | |
|---|---|---|---|
| 3CCEUF | 14 | Cp | 126 |
| 5CCEUF | 2.5 | $\Delta\varepsilon$ | 11 |
| 3CPO1 | 4 | $\Delta n$ | 0.1005 |
| 3CPP2 | 5 | $K_{33}/K_{22}$ | 2.64 |
| 3CGPC3 | 6 | HTP (after the addition of S-811) | 10.8 |
| 3CPGF | 4 | $t_{-30°C}$ | ≥ 7 days |
| 3CCUF | 10 | | |
| 3CCPUF | 5.5 | | |
| 4CCPUF | 6 | | |
| 3CCGUF | 6 | | |
| 4CC3 | 3 | | |
| 5CC3 | 5 | | |
| 3CCO1 | 4 | | |
| 2CC1(2F)OUF | 11 | | |
| 3CC1(2F)OUF | 11 | | |
| 3PGU1(2F)OUF | 3 | | |
| Total | 100 | | |

The liquid crystal composition prepared according to Table 16 is mixed with a dichroic dye and a chiral dopant according to the weight percentages in Table 17 to obtain the dye-doped liquid crystal composition in which the liquid crystal molecules have a twist angle of 1050°. The reflectivity of the reflective liquid crystal display device comprising the dye-doped liquid crystal composition with a cell gap of 9 $\mu$m is tested to obtain $R_{off}$ and $R_{on}$, and the contrast CR is calculated. The results are shown in Table 17. The display effects from a front viewing angle and a side viewing angle of the reflective liquid crystal device comprising a liquid crystal composition with a twist angle of 1050° is shown in Fig. 5.

Table 17

| Component | Weight percentage | Test results for the performance parameters | |
|---|---|---|---|
| Liquid crystal composition of Example 3 | 95 | $R_{off}$ | 3.5 |
| Black dye | 2 | $R_{on}$ | 40.9 |
| S-811 | 3 | CR | 11.7 |
| Total | 100 | $t_{-30°C}$ | ≥ 7 days |

As can be seen from the comparison between Fig. 3 and Fig. 5, the reflective liquid crystal display device provided by the present invention has higher contrast and wider viewing angle.

**Example 4**

The liquid crystal composition of Example 4 is prepared according to each compound and weight percentage listed in Table 18 and then tested for performance by filling the same between two substrates of a liquid crystal display device. The test data is shown in the Table below:

Table 18 Formulation and test results for the performance parameters of the liquid crystal composition

| Code of component | Weight percentage | Test results for the performance parameters | |
|---|---|---|---|
| 3CCEUF | 10.5 | Cp | 102 |
| 5CCEUF | 6 | $\Delta\varepsilon$ | 14.3 |
| 3CPO1 | 4 | $\Delta n$ | 0.102 |
| 3CCO1 | 4 | $K_{33}/K_{22}$ | 2.46 |
| 5CC3 | 4 | HTP (after the addition of S-811) | 12.1 |
| 3CPP2 | 5 | $t_{-30^\circ C}$ | ≥ 7 days |
| 3CPUF | 4 | | |
| 3CCUF | 10 | | |
| 3CCPUF | 4 | | |
| 2CCPUF | 4.5 | | |
| 4CCPUF | 3 | | |
| 3CCGUF | 6 | | |
| 4CC3 | 4 | | |
| 2CC1(2F)OUF | 10 | | |
| 3CC1(2F)OUF | 8 | | |
| 3PU1(2F)OUF | 9 | | |
| 3PGU1(2F)OUF | 4 | | |
| Total | 100 | | |

The liquid crystal composition prepared according to Table 18 is mixed with a dichroic dye and a chiral dopant according to the weight percentages in Tables 19-20 to obtain the dye-doped liquid crystal compositions in which the liquid crystal molecules have a twist angle of 540° and 610°, respectively. The reflective liquid crystal display devices comprising the dye-doped liquid crystal compositions with a cell gap of 7 μm and 3.5 μm are tested to obtain $R_{off}$ and $R_{on}$, and the contrast CR is calculated. The results are shown in Tables 19-20.

Table 19

| Component | Weight percentage | Test results for the performance parameters | |
|---|---|---|---|
| Liquid crystal composition of Example 4 | 96.2 | $R_{off}$* | 3.3 |
| Red dye ($\lambda_{max}$ = 511 nm) | 2 | $R_{on}$* | 39 |
| S-811 | 1.8 | CR* | 11.8 |
| Total | 100 | $t_{-30^\circ C}$ | ≥ 7 days |

Table 20

| Component | Weight percentage | Test results for the performance parameters | |
|---|---|---|---|
| Liquid crystal composition of Example 4 | 91.8 | $R_{off}$ | 5.1 |
| Black dye | 4.2 | $R_{on}$ | 55.7 |
| S-811 | 4 | CR | 10.9 |
| Total | 100 | $t_{-30^\circ C}$ | ≥ 7 days |

**Example 5**

The liquid crystal composition of Example 5 is prepared according to each compound and weight percentage listed in Table 21 and then tested for performance by filling the same between two substrates of a liquid crystal display device. The test data is shown in the Table below:

Table 21 Formulation and test results for the performance parameters of the liquid crystal composition

| Code of component | Weight percentage | Test results for the performance parameters | |
|---|---|---|---|
| 3CCEPC2 | 4 | Cp | 126 |
| 3CCEPC4 | 4 | $\Delta\varepsilon$ | -5.8 |
| 3CCEPC3 | 6 | $\Delta n$ | 0.099 |
| 3CCEPC5 | 4 | $K_{33}/K_{22}$ | 2.27 |
| 3CWO2 | 16 | HTP (after the addition of S-811) | 10.3 |
| 5CWO2 | 7.5 | $t_{-30°C}$ | ≥ 7 days |
| 2CPWO2 | 5.5 | | |
| 3CWO4 | 15 | | |
| 3CCWO2 | 10 | | |
| 5CCWO2 | 10 | | |
| 4CCWO2 | 9 | | |
| 3CCWO3 | 9 | | |
| Total | 100 | | |

The liquid crystal composition prepared according to Table 21 is mixed with a dichroic dye and a chiral dopant according to the weight percentages in Table 22 to obtain the dye-doped liquid crystal composition in which the liquid crystal molecules have a twist angle of 80°. The reflectivity of the reflective liquid crystal display device comprising the dye-doped liquid crystal composition with a cell gap of 4 $\mu$m is tested to obtain $R_{off}$ and $R_{on}$, and the contrast CR is calculated. The results are shown in Table 22.

Table 22

| Component | Weight percentage | Test results for the performance parameters | |
|---|---|---|---|
| Liquid crystal composition of Example 5 | 95.47 | $R_{off}$ | 26 |
| Black dye | 4 | $R_{on}$ | 62.8 |
| S-811 | 0.53 | CR | 2.4 |
| Total | 100 | $t_{-30°C}$ | ≥ 7 days |

**Example 6**

The liquid crystal composition of Example 6 is prepared according to each compound and weight percentage listed in Table 23 and then tested for performance by filling the same between two substrates of a liquid crystal display device. The test data is shown in the Table below:

Table 23 Formulation and test results for the performance parameters of the liquid crystal composition

| Code of component | Weight percentage | Test results for the performance parameters | |
|---|---|---|---|
| 3CCEUF | 14 | Cp | 126 |
| 5CCEUF | 2.5 | $\Delta\varepsilon$ | 11 |

(continued)

| Code of component | Weight percentage | Test results for the performance parameters | |
|---|---|---|---|
| 3CPO1 | 4 | $\Delta n$ | 0.1005 |
| 3CPP2 | 5 | $K_{33}/K_{22}$ | 2.64 |
| 3CGPC3 | 6 | HTP (after the addition of S-811) | 10.8 |
| 3CPGF | 4 | $t_{-30°C}$ | ≥ 7 days |
| 3CCUF | 10 | | |
| 3CCPUF | 5.5 | | |
| 4CCPUF | 6 | | |
| 3CCGUF | 6 | | |
| 4CC3 | 3 | | |
| 5CC3 | 5 | | |
| 3CCO1 | 4 | | |
| 2CC1(2F)OUF | 11 | | |
| 3CC1(2F)OUF | 11 | | |
| 3PGU1(2F)OUF | 3 | | |
| Total | 100 | | |

The liquid crystal composition prepared according to Table 23 is mixed with a dichroic dye and a chiral dopant according to the weight percentages in Table 24 to obtain the dye-doped liquid crystal composition in which the liquid crystal molecules have a twist angle of 175°. The reflectivity of the reflective liquid crystal display device comprising the dye-doped liquid crystal composition with a cell gap of 9 μm is tested to obtain $R_{off}$ and $R_{on}$, and the contrast CR is calculated. The results are shown in Table 24.

Table 24

| Component | Weight percentage | Test results for the performance parameters | |
|---|---|---|---|
| Liquid crystal composition of Example 6 | 97.5 | $R_{off}$ | 9.5 |
| Black dye | 2 | $R_{on}$ | 52.4 |
| S-811 | 0.5 | CR | 5.5 |
| Total | 100 | $t_{-30°C}$ | ≥ 7 days |

**Example 7**

The liquid crystal composition of Example 7 is prepared according to each compound and weight percentage listed in Table 25 and then tested for performance by filling the same between two substrates of a liquid crystal display device. The test data is shown in the Table below:

Table 25 Formulation and test results for the performance parameters of the liquid crystal composition

| Code of component | Weight percentage | Test results for the performance parameters | |
|---|---|---|---|
| 3CCEUF | 14 | Cp | 124 |
| 5CCEUF | 2.5 | $\Delta\varepsilon$ | 14 |
| 3CPO1 | 4 | $\Delta n$ | 0.1011 |
| 3CPP2 | 5 | $K_{33}/K_{22}$ | 2.37 |

(continued)

| Code of component | Weight percentage | Test results for the performance parameters | |
|---|---|---|---|
| 3CGPC3 | 6 | HTP (after the addition of S-811) | 11 |
| 3CPGF | 4 | $t_{-30°C}$ | ≥ 7 days |
| 3PEGN | 4 | | |
| 3CCUF | 10 | | |
| 3CCPUF | 5.5 | | |
| 4CCPUF | 6 | | |
| 3CCGUF | 6 | | |
| 5CCV | 4 | | |
| 3CCO1 | 4 | | |
| 2CC1(2F)OUF | 11 | | |
| 3CC1(2F)OUF | 11 | | |
| 3PGU1(2F)OUF | 3 | | |
| Total | 100 | | |

The liquid crystal composition prepared according to Table 25 is mixed with a dichroic dye and a chiral dopant according to the weight percentages in Table 26 to obtain the dye-doped liquid crystal composition in which the liquid crystal molecules have a twist angle of 610°. The reflectivity of the reflective liquid crystal display device comprising the dye-doped liquid crystal composition with a cell gap of 3.5 μm is tested to obtain $R_{off}$ and $R_{on}$, and the contrast CR is calculated. The results are shown in Table 26.

Table 26

| Component | Weight percentage | Test results for the performance parameters | |
|---|---|---|---|
| Liquid crystal composition of Example 7 | 92.1 | $R_{off}$ | 6.4 |
| Black dye | 3.5 | $R_{on}$ | 58.8 |
| S-811 | 4.4 | CR | 9.2 |
| Total | 100 | $t_{-30°C}$ | ≥ 7 days |

**Example 8**

The liquid crystal composition of Example 8 is prepared according to each compound and weight percentage listed in Table 27 and then tested for performance by filling the same between two substrates of a liquid crystal display device. The test data is shown in the Table below:

Table 27 Formulation and test results for the performance parameters of the liquid crystal composition

| Code of component | Weight percentage | Test results for the performance parameters | |
|---|---|---|---|
| 3CCEPC2 | 4 | Cp | 126 |
| 3CCEPC4 | 4 | $\Delta\varepsilon$ | -5.8 |
| 3CCEPC3 | 6 | $\Delta n$ | 0.099 |
| 3CCEPC5 | 4 | $K_{33}/K_{22}$ | 2.27 |
| 3CWO2 | 16 | HTP (after the addition of S-811) | 10.3 |
| 5CWO2 | 7.5 | $t_{-30°C}$ | ≥ 7 days |

(continued)

| Code of component | Weight percentage | Test results for the performance parameters | |
|---|---|---|---|
| 2CPWO2 | 5.5 | | |
| 3CWO4 | 15 | | |
| 3CCWO2 | 10 | | |
| 5CCWO2 | 10 | | |
| 4CCWO2 | 9 | | |
| 3CCWO3 | 9 | | |
| Total | 100 | | |

The liquid crystal composition prepared according to Table 27 is mixed with a dichroic dye and a chiral dopant according to the weight percentages in Table 28 to obtain the dye-doped liquid crystal composition in which the liquid crystal molecules have a twist angle of 400°. The reflectivity of the reflective liquid crystal display device comprising the dye-doped liquid crystal composition with a cell gap of 6 μm is tested to obtain $R_{off}$ and $R_{on}$, and the contrast CR is calculated. The results are shown in Table 28. When observing with a microscope, it is found that there are disclination lines in the display device in the intermediate state when applying a voltage (as shown in Fig. 7).

Table 28

| Component | Weight percentage | Test results for the performance parameters | |
|---|---|---|---|
| Liquid crystal composition of Example 8 | 95.2 | $R_{off}$ | 3.2 |
| Black dye | 3 | $R_{on}$ | 39.6 |
| S-811 | 1.8 | CR | 12.4 |
| Total | 100 | $t_{-30°C}$ | ≥ 7 days |

As can be seen from the comparisons among Comparative Examples 1-3 and Examples 1-8, the improvements in the chiral dopants, the dichroic dyes and the liquid crystal composition in the dye-doped liquid crystal composition of the present invention allows that the reflective liquid crystal display device comprising the dye-doped liquid crystal composition has extremely high contrast, wider viewing angle and wider operating temperature range. In specific, the liquid crystal compositions used in Examples 1-8 of the present invention meet the conditions that Cp is not less than 100°C and $K_{33}/K_{22}$ is greater than 2, such that the dye molecules are more orderly aligned in the liquid crystal composition, thereby enabling the high contrast of corresponding reflective devices. Through further optimizing the component of the liquid crystal composition to reduce the use of cyano-containing polar monomers and olefinic bond-containing neutral monomers, the dyes have a further improved solubility in the liquid crystal composition, thereby further improving the contrast of reflective devices, and the resultant dye-doped liquid crystal composition has better low-temperature stability and is applicable to a wider operating temperature range. In addition, as can be seen from the comparisons between Examples 1 and 5 as well as Examples 3 and 6 of the present invention, when the same liquid crystal composition is used, there will be an increase in the reflectivity at dark state and a reduction in the contrast if the amount of the chiral dopant is too low. As can be seen from the comparison between Examples 1 and 8 of the present invention, there will be disclination in the intermediate state when applying a voltage if the amount of the chiral dopant is too high.

There are also other various embodiments in the present invention. Without departing from the scope of the present invention, the skilled artisan shall make various equivalent variations or modification, which shall fall within the protection scope of the claims appended hereto, according to the present invention.

## Claims

1. A reflective liquid crystal display device comprising a dye-doped liquid crystal composition, wherein the reflective liquid crystal display device comprises from top to bottom: an upper substrate, an upper conductive layer, an upper alignment layer, a dye-doped liquid crystal composition layer, a lower alignment layer, a lower conductive layer, a lower substrate and a reflective layer, the reflective liquid crystal display device does not comprise a polarizer, the

dye-doped liquid crystal composition layer comprises a liquid crystal composition, a chiral dopant and a dichroic dye, wherein the liquid crystal composition has a clearing point of no less than 100°C and a $K_{33}/K_{22}$ of greater than 2; wherein:

the liquid crystal composition comprises at least one compound of general formula M:

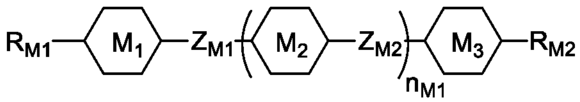

M,

in which,

$R_{M1}$ and $R_{M2}$ each independently represents -H, a $C_{1-12}$ linear or branched alkyl,

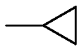,

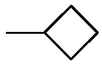 or 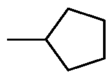,

one or more nonadjacent $-CH_2-$ in the $C_{1-12}$ linear or branched alkyl can each be independently replaced by -CH=CH-, -C=C-, -O-, -CO-, -CO-O- or -O-CO-;

ring

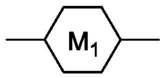,

ring

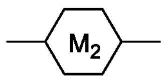

and ring

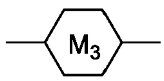

each independently represents

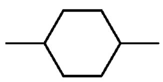

or

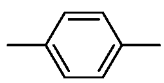,

wherein one or more $-CH_2-$ in

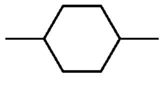

can be replaced by -O-, and at most one -H on

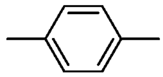

can be substituted by halogen, wherein when ring

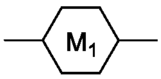 is 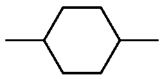 ,

$R_{M1}$ can further represent -CN, and when ring

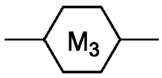 is 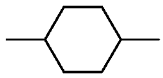 ,

$R_{M2}$ can further represent -CN;

$Z_{M1}$ and $Z_{M2}$ each independently represents a single bond, -CO-O-, -O-CO-, $-CH_2O-$, $-OCH_2-$, -CH=CH-, -C=C-, $-CH_2CH_2-$ or $-(CH_2)_4-$, and

$n_{M1}$ represents 0, 1, 2 or 3, and when $n_{M1}$ represents 2 or 3, ring

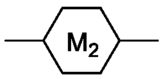

can be same or different, and $Z_{M2}$ can be same or different, wherein

the liquid crystal composition comprises at least one compound of general formula A or at least one compound of general formula N:

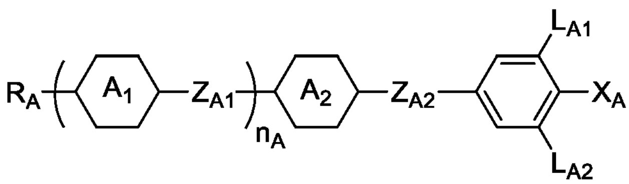

A;

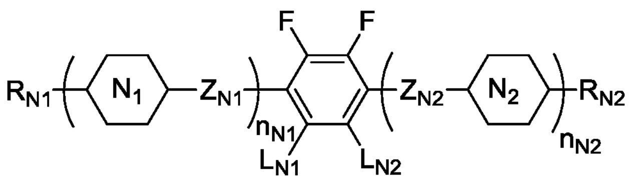

N,

in which,

$R_A$ represents a $C_{1-12}$ linear or branched alkyl,

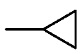, 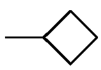 or 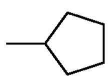,

one or more nonadjacent $-CH_2-$ in the $C_{1-12}$ linear or branched alkyl can each be independently replaced by -CH=CH-, -C=C-, -O-, -CO-, -CO-O- or -O-CO-, and one or more -H in the $C_{1-12}$ linear or branched alkyl,

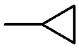, 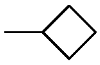 or 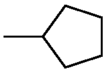

can each be independently substituted by-F or -Cl;
$R_{N1}$ and $R_{N2}$ each independently represents a $C_{1-12}$ linear or branched alkyl,

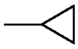,

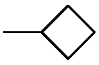 or 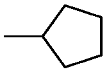,

one or more nonadjacent $-CH_2-$ in the $C_{1-12}$ linear or branched alkyl can each be independently replaced by -CH=CH-, -C=C-, -O-, -CO-, -CO-O- or -O-CO-;
ring

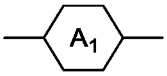

and ring

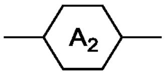

each independently represents

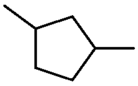,

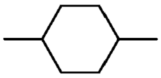, 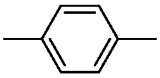 or 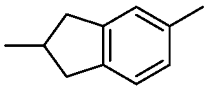,

wherein one or more $-CH_2-$ in

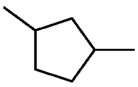, 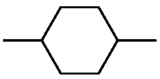 and 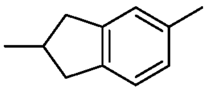

can be replaced by -O-, and one or more single bonds in the rings can be replaced by double bond, wherein one or more -H on

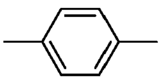 and 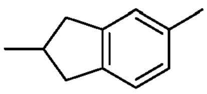

can be substituted by -CN, -F or -Cl, and one or more -CH= in the rings can be replaced by -N=;
ring

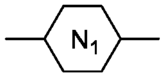

and ring

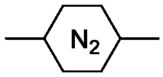

each independently represents

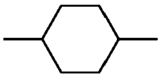 or 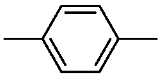 ,

wherein one or more $-CH_2-$ in

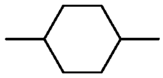

can be replaced by -O-, and one or more single bonds in the ring can be replaced by double bond, wherein one or more -H on

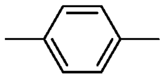

can be substituted by -CN, -F or -Cl, and one or more -CH= in the ring can be replaced by -N=;

$Z_{A1}$, $Z_{A2}$, $Z_{N1}$ and $Z_{N2}$ each independently represents a single bond, $-CH_2CH_2-$, $-(CH_2)_4-$, $-CF_2CF_2-$, $-CF_2O-$, $-OCF_2-$, -CO-O-, -O-CO-, -O-CO-O-, -CH=CH-, -C=C-, -CF=CF-, -CHzO- or $-OCH_2-$;

$L_{A1}$ and $L_{A2}$ each independently represents -H or -F;

$L_{N1}$ and $L_{N2}$ each independently represents -H or $-CH_3$;

$X_A$ represents halogen, -CN, a $C_{1-5}$ halogenated alkyl or halogenated alkoxy, a $C_{2-5}$ halogenated alkenyl or halogenated alkenoxy; and

$n_A$, $n_{N1}$ and $n_{N2}$ each independently represents 0, 1, 2 or 3, and $0 \leq n_{N1} + n_{N2} \leq 3$, and when $n_A$ represents 2 or 3, ring

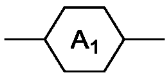

can be same or different, and $Z_{A1}$ can be same or different; when $n_{N1}$ represents 2 or 3, ring

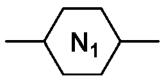

can be same or different, and $Z_{N1}$ can be same or different; when $n_{N2}$ represents 2 or 3, ring

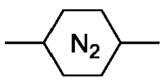

can be same or different, and $Z_{N2}$ can be same or different;

wherein a -CN substituent-containing compound in the liquid crystal composition is in an amount of less than 10% of the total weight of the liquid crystal composition; and

wherein the liquid crystal composition comprises:
one or more compounds of general formula M in an amount of 5-50% of the total weight of the liquid crystal composition, and one or more compounds of general formula A in an amount of 50-95% of the total weight of the liquid crystal composition; or,
one or more compounds of general formula M in an amount of 5-30% of the total weight of the liquid crystal composition, and one or more compounds of general formula N in an amount of 70-95% of the total weight of the liquid crystal composition.

**2.** The reflective liquid crystal display device comprising the dye-doped liquid crystal composition according to claim 1, wherein the reflective layer is a specular reflective layer and/or a diffuse reflective layer.

**3.** The reflective liquid crystal display device comprising the dye-doped liquid crystal composition according to claim 1, wherein a diffuser is disposed between the lower substrate and the reflective layer.

**4.** The reflective liquid crystal display device comprising the dye-doped liquid crystal composition according to claim 1, wherein the compound of general formula M in which $R_{M1}$ and/or $R_{M2}$ contains a structure of -CH=CH- is in an amount of less than 5% of the total weight of the liquid crystal composition.

**5.** The reflective liquid crystal display device comprising the dye-doped liquid crystal composition according to any preceding claim, wherein the liquid crystal composition comprises: one or more compounds of general formula M in an amount of 1-60% of the total weight of the liquid crystal composition, and one or more compounds of general formula A in an amount of 40-99% of the total weight of the liquid crystal composition; or, one or more compounds of general formula M in an amount of 0-50% of the total weight of the liquid crystal composition, and one or more compounds of general formula N in an amount of 50-100% of the total weight of the liquid crystal composition.

**6.** The reflective liquid crystal display device comprising the dye-doped liquid crystal composition according to any preceding claim, wherein the dichroic dye is one or more of an orange-yellow dichroic dye, a purple dichroic dye, a red dichroic dye, a purple-red dichroic dye and a blue dichroic dye, and the dichroic dye is in an amount of 1.5-6% of the total weight of the dye-doped liquid crystal composition.

**7.** The reflective liquid crystal display device comprising the dye-doped liquid crystal composition according to any preceding claim, wherein the dye-doped liquid crystal composition layer has a thickness of 3-25 $\mu$m.

**8.** The reflective liquid crystal display device comprising the dye-doped liquid crystal composition according to any preceding claim, wherein when the liquid crystal composition has positive dielectric anisotropy, the dye-doped liquid crystal composition has a twist angle between 180°-1440°, and the percentage of the chiral dopant in the dye-doped liquid crystal composition to the total weight of the dye-doped liquid crystal composition is between $0.5/(d\times HTP)$ - $4/(d\times HTP)$, wherein d is thickness of the dye-doped liquid crystal composition layer, and HTP is Helical Twisting Power Constant of liquid crystal.

**9.** The reflective liquid crystal display device comprising the dye-doped liquid crystal composition according to claim any of claims 1 to 7, wherein when the liquid crystal composition has a negative dielectric anisotropy, the dye-doped liquid crystal composition has a twist angle between 90°-360°, and the percentage of the chiral dopant in the dye-doped liquid crystal composition to the total weight of the dye-doped liquid crystal composition is between $1/(4d\times HTP)$ - $1/(d\times HTP)$, wherein d is thickness of the dye-doped liquid crystal composition layer, and HTP is Helical Twisting Power Constant of liquid crystal.

## Patentansprüche

**1.** Reflektierende Flüssigkristallanzeigevorrichtung, umfassend eine farbstoffdotierte Flüssigkristallzusammensetzung, wobei die reflektierende Flüssigkristallanzeigevorrichtung von oben nach unten umfasst: ein oberes Substrat, eine obere leitfähige Schicht, eine obere Ausrichtungsschicht, eine Schicht aus farbstoffdotierter Flüssigkristallzusammensetzung, eine untere Ausrichtungsschicht, eine untere leitfähige Schicht, ein unteres Substrat und eine reflektierende Schicht, wobei die Flüssigkristallanzeigevorrichtung keinen Polarisator umfasst, wobei die Schicht aus farbstoffdotierter Flüssigkristallzusammensetzung eine Flüssigkristallzusammensetzung, ein chirales Dotiermittel und einen dichroitischen Farbstoff umfasst, wobei die Flüssigkristallzusammensetzung einen Klärpunkt von nicht weniger als 100 °C und ein $K_{33}/K_{22}$ von mehr als 2 aufweist; wobei:

die Flüssigkristallzusammensetzung mindestens eine Verbindung umfasst der allgemeinen Formel M:

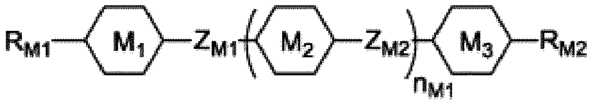

M,

in der

$R_{M1}$ und $R_{M2}$ jeweils unabhängig -H, ein lineares oder verzweigtes $C_{1-12}$-Alkyl,

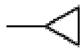

, 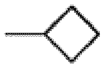 oder 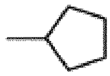

darstellt, wobei ein oder mehrere nicht benachbarte $-CH_2-$ in dem linearen oder verzweigten $C_{1-12}$-Alkyl jeweils unabhängig ersetzt sein können durch - CH=CH-, -C=C-, -O-, -CO-, -CO-O- oder -O-CO-;

Ring

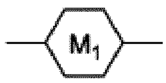

,

Ring

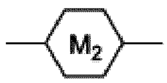

und Ring

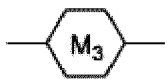

jeweils unabhängig

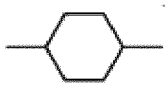 oder 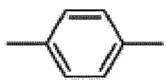

darstellt, wobei ein oder mehrere $-CH_2-$ in

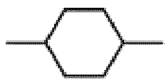

durch -O- ersetzt sein können, und höchstens ein -H an

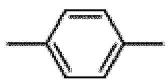

durch Halogen substituiert sein kann, wobei, wenn Ring

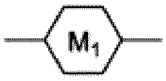 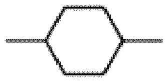

ist, $R_{M1}$ weiter -CN darstellen kann, und wenn Ring

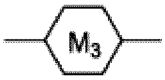 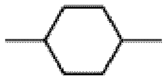

ist, $R_{M2}$ weiter -CN darstellen kann;
$Z_{M1}$ und $Z_{M2}$ jeweils unabhängig eine Einzelbindung, -CO-O-, -O-CO-, $-CH_2O-$, $-OCH_2-$, -CH=CH-, -C=C-, $-CH_2CH_2-$ oder $-(CH_2)_4-$ darstellt; und
$n_{M1}$ 0, 1, 2 oder 3 darstellt, und wenn $n_{M1}$ 2 oder 3 darstellt, Ring

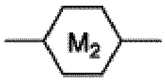

gleich oder unterschiedlich sein kann und $Z_{M2}$ gleich oder unterschiedlich sein kann; wobei
die Flüssigkristallzusammensetzung mindestens eine Verbindung der allgemeinen Formel A oder mindestens eine Verbindung der allgemeinen Formel N umfasst:

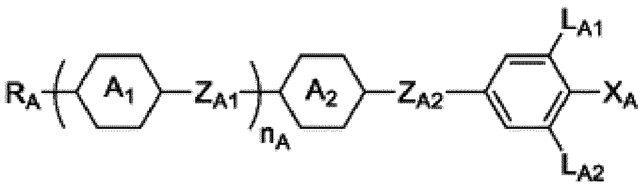

A;

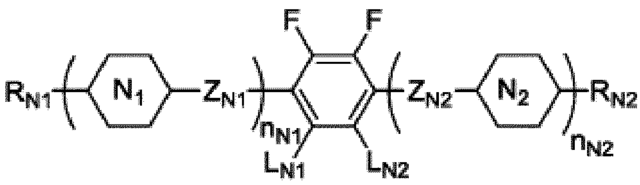

N,

in der
$R_A$ ein lineares oder verzweigtes $C_{1-12}$-Alkyl,

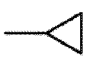, 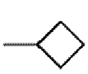 oder 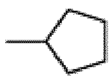.

darstellt, wobei ein oder mehrere nicht benachbarte $-CH_2-$ in dem linearen oder verzweigten $C_{1-12}$-Alkyl unabhängig durch -CH=CH-, -C=C-, -O-, -CO-, -CO-O- oder -O-COersetzt sein können und ein oder mehrere -H in dem linearen oder verzweigten $C_{1-12}$-Alkyl,

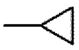, 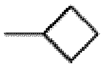 oder 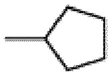

jeweils durch -F oder -Cl substituiert sein können;
$R_{N1}$ und $R_{N2}$ jeweils unabhängig ein lineares oder verzweigtes $C_{1-12}$-Alkyl,

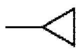,

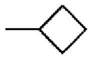 oder 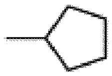

darstellt, wobei ein oder mehrere nicht benachbarte $-CH_2-$ in dem linearen oder verzweigten $C_{1-12}$-Alkyl jeweils unabhängig durch -CH=CH-, -C=C-, -O-, -CO-, -CO-O- oder -O-CO- ersetzt sein können;
Ring

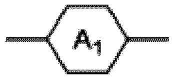

und Ring

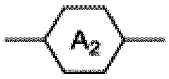

jeweils unabhängig

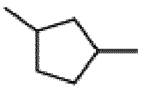,

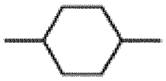, 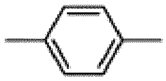 oder 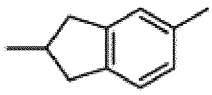

darstellt, wobei ein oder mehrere $-CH_2-$ in

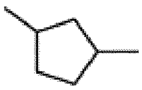, 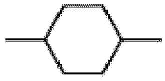 und 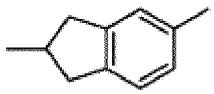

durch -O- ersetzt sein können und eine oder mehrere Einfachbindungen in den Ringen durch Doppelbindung ersetzt sein können, wobei ein oder mehrere -H an

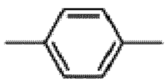 und 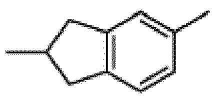

durch -CN, - F oder -Cl substituiert sein können und ein oder mehrere -CH= in den Ringen durch -N= ersetzt sein können;
Ring

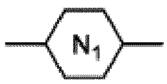

und Ring

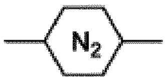

jeweils unabhängig

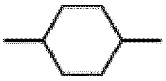

oder

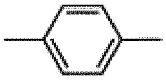

darstellt, wobei ein oder mehrere $-CH_2-$ in

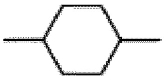

durch -O- ersetzt sein können und eine oder mehrere Einfachbindungen in dem Ring durch Doppelbindung ersetzt sein können, wobei ein oder mehrere -H an

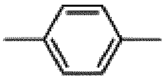

durch -CN, -F oder -Cl substituiert sein können und ein oder mehrere -CH= in dem Ring durch -N= ersetzt sein können;

$Z_{A1}$, $Z_{A2}$, $Z_{N1}$ und $Z_{N2}$ jeweils unabhängig eine Einfachbindung, $-CH_2CH_2-$, $-(CH_2)_4-$, $- CF_2CF_2-$, $-CF_2O-$, $-OCF_2-$, -CO-O-, -O-CO-, -O-CO-O-, -CH=CH-, -C=C-, -CF=CF-, $-CH_2O-$ oder $- OCH_2-$ darstellt;

$L_{A1}$ und $L_{A2}$ jeweils unabhängig -H oder -F darstellt;

$L_{N1}$ und $L_{N2}$ jeweils unabhängig -H oder $-CH_3$ darstellt;

$X_A$ Halogen, -CN, ein halogeniertes $C_{1-5}$-Alkyl oder halogeniertes -Alkoxy, ein halogeniertes $C_{2-5}$-Alkenyl oder halogeniertes -Alkenoxy darstellt; und

$n_A$, $n_{N1}$ und $n_{N2}$ jeweils unabhängig 0, 1, 2 oder 3 darstellt und $0 \leq n_{N1} + n_{N2} \leq 3$, und wenn $n_A$ 2 oder 3 darstellt, Ring

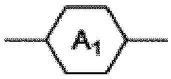

gleich oder unterschiedlich sein kann und $Z_{A1}$ gleich oder unterschiedlich sein kann; wenn $n_{N1}$ 2 oder 3 darstellt, Ring

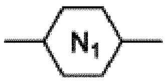

gleich oder unterschiedlich sein kann und $Z_{N1}$ gleich oder unterschiedlich sein kann; wenn $n_{N2}$ 2 oder 3 darstellt, Ring

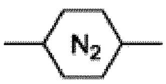

gleich oder unterschiedlich sein kann und $Z_{N2}$ gleich oder unterschiedlich sein kann;
wobei eine Verbindung, die einen -CN-Substituenten enthält, in der Flüssigkristallzusammensetzung in einer Menge von weniger als 10 % des Gesamtgewichts der Flüssigkristallzusammensetzung vorliegt; und
wobei die Flüssigkristallzusammensetzung umfasst:

eine oder mehrere Verbindungen der allgemeinen Formel M in einer Menge von 5-50 % des Gesamtgewichts der Flüssigkristallzusammensetzung und eine oder mehrere Verbindungen der allgemeinen Formel A in einer Menge von 50-95 % des Gesamtgewichts der Flüssigkristallzusammensetzung; oder
eine oder mehrere Verbindungen der allgemeinen Formel M in einer Menge von 5-30 % des Gesamtgewichts der Flüssigkristallzusammensetzung und eine oder mehrere Verbindungen der allgemeinen Formel N in einer Menge von 70-95 % des Gesamtgewichts der Flüssigkristallzusammensetzung.

**2.** Reflektierende Flüssigkristallanzeigevorrichtung, umfassend die farbstoffdotierte Flüssigkristallzusammensetzung nach Anspruch 1, wobei die reflektierende Schicht eine spiegelnd reflektierende Schicht und/oder eine diffus reflektierende Schicht ist.

**3.** Reflektierende Flüssigkristallanzeigevorrichtung, umfassend die farbstoffdotierte Flüssigkristallzusammensetzung nach Anspruch 1, wobei ein Diffusor zwischen dem unteren Substrat und der reflektierenden Schicht angeordnet ist.

**4.** Reflektierende Flüssigkristallanzeigevorrichtung, umfassend die farbstoffdotierte Flüssigkristallzusammensetzung nach Anspruch 1, wobei die Verbindung der allgemeinen Formel M, in der $R_{M1}$ und/oder $R_{M2}$ eine Struktur von -CH=CH- enthält, in einer Menge von weniger als 5 % des Gesamtgewichts der Flüssigkristallzusammensetzung vorliegt.

**5.** Reflektierende Flüssigkristallanzeigevorrichtung, umfassend die farbstoffdotierte Flüssigkristallzusammensetzung nach einem vorstehenden Anspruch, wobei die Flüssigkristallzusammensetzung umfasst: eine oder mehrere Verbindungen der allgemeinen Formel M in einer Menge von 1-60 % des Gesamtgewichts der Flüssigkristallzusammensetzung und eine oder mehrere Verbindungen der allgemeinen Formel A in einer Menge von 40-99 % des Gesamtgewichts der Flüssigkristallzusammensetzung; oder eine oder mehrere Verbindungen der allgemeinen Formel M in einer Menge von 0-50 % des Gesamtgewichts der Flüssigkristallzusammensetzung und eine oder mehrere Verbindungen der allgemeinen Formel N in einer Menge von 50-100 % des Gesamtgewichts der Flüssigkristallzusammensetzung.

**6.** Reflektierende Flüssigkristallanzeigevorrichtung, umfassend die farbstoffdotierte Flüssigkristallzusammensetzung nach einem vorstehenden Anspruch, wobei der dichroitische Farbstoff einer oder mehrere ist von einem orange-gelben dichroitischen Farbstoff, einem violetten dichroitischen Farbstoff, einem roten dichroitischen Farbstoff, einem violett-roten dichroitischen Farbstoff und einem blauen dichroitischen Farbstoff, und der dichroitische Farbstoff in einer Menge von 1,5-6 % des Gesamtgewichts der farbstoffdotierten Flüssigkristallzusammensetzung vorliegt.

**7.** Reflektierende Flüssigkristallanzeigevorrichtung, umfassend die farbstoffdotierte Flüssigkristallzusammensetzung nach einem vorstehenden Anspruch, wobei die Schicht aus farbstoffdotierter Flüssigkristallzusammensetzung eine Dicke von 3-25 $\mu$m aufweist.

**8.** Reflektierende Flüssigkristallanzeigevorrichtung, umfassend die farbstoffdotierte Flüssigkristallzusammensetzung nach einem vorstehenden Anspruch, wobei, wenn die Flüssigkristallzusammensetzung eine positive dielektrische Anisotropie aufweist, die farbstoffdotierte Flüssigkristallzusammensetzung einen Verdrehwinkel zwischen 180°-1440° aufweist und der Prozentsatz des chiralen Dotiermittels in der farbstoffdotierten Flüssigkristallzusammensetzung zu dem Gesamtgewicht der farbstoffdotierten Flüssigkristallzusammensetzung zwischen $0{,}5/(d \times HTP)$ - $4/(d \times HTP)$ liegt, wobei d die Dicke der Schicht aus farbstoffdotierter Flüssigkristallzusammensetzung ist und HTP die Verdrillungsstärkekonstante des Flüssigkristalls ist.

**9.** Reflektierende Flüssigkristallanzeigevorrichtung, umfassend die farbstoffdotierte Flüssigkristallzusammensetzung nach einem der Ansprüche 1 bis 7, wobei, wenn die Flüssigkristallzusammensetzung eine negative dielektrische Anisotropie aufweist, die farbstoffdotierte Flüssigkristallzusammensetzung einen Verdrehwinkel zwischen 90°-360° aufweist und der Prozentsatz des chiralen Dotiermittels in der farbstoffdotierten Flüssigkristallzusammensetzung zu dem Gesamtgewicht der farbstoffdotierten Flüssigkristallzusammensetzung zwischen 1/(4dxHTP) - 1/(dxHTP) liegt, wobei d die Dicke der Schicht aus farbstoffdotierter Flüssigkristallzusammensetzung ist und HTP die Verdrillungsstärkekonstante des Flüssigkristalls ist.

## Revendications

**1.** Dispositif d'affichage réflexif à cristaux liquides comprenant une composition de cristaux liquides dopée avec un colorant, dans lequel le dispositif d'affichage réflexif à cristaux liquides comprend de haut en bas : un substrat supérieur, une couche conductrice supérieure, une couche d'alignement supérieure, une couche de composition de cristaux liquides dopée avec un colorant, une couche d'alignement inférieure, une couche conductrice inférieure, un substrat inférieur et une couche réfléchissante, le dispositif d'affichage réflexif à cristaux liquides ne comprend pas de polariseur, la couche de composition de cristaux liquides dopée avec un colorant comprend une composition de cristaux liquides, un dopant chiral et un colorant dichroïque, dans lequel la composition de cristaux liquides présente un point de clarification non inférieur à 100 °C et un $K_{33}/K_{22}$ supérieur à 2 ; dans lequel :

la composition de cristaux liquides comprend au moins un composé de formule générale M :

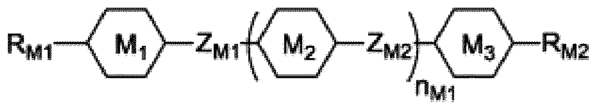

M,

dans laquelle,
$R_{M1}$ et $R_{M2}$ représentent chacun indépendamment -H, un alkyle en $C_{1-12}$ linéaire ou ramifié,

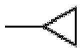, 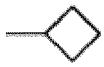 ou 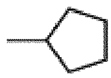,

un ou plusieurs $-CH_2-$ non adjacents dans l'alkyle en $C_{1-12}$ linéaire ou ramifié peuvent être chacun indépendamment remplacés par -CH=CH-, -C=C-, -O-, -CO-, -CO-O- ou -O-CO- ;
le cycle

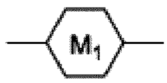,

le cycle

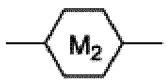

et le cycle

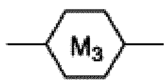

représentent chacun indépendamment

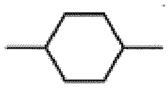 ou 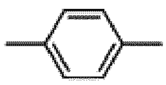,

dans lequel un ou plusieurs $-CH_2-$ dans

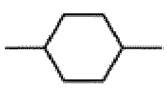

peuvent être remplacés par -O-, et au plus un -H sur

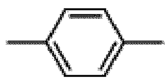

peut être remplacé par un halogène, dans lequel quand le cycle

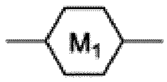 est 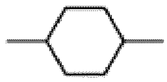 ,

$R_{M1}$ peut représenter en outre -CN, et quand le cycle

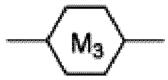 est 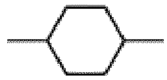 ,

$R_{M2}$ peut représenter en outre -CN ;
$Z_{M1}$ et $Z_{M2}$ représentent chacun indépendamment une liaison simple, -CO-O-, -O-CO-, $-CH_2O-$, $-OCH_2-$, -CH=CH-, -C≡C-, $-CH_2CH_2-$ ou $-(CH_2)_4-$ ; et
$n_{M1}$ représente 0, 1, 2 ou 3, et quand $n_{M1}$ représente 2 ou 3, le cycle

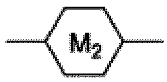

peut être identique ou différent, et $Z_{M2}$ peut être identique ou différent ; dans lequel
la composition de cristaux liquides comprend au moins un composé de formule générale A ou au moins un composé de formule générale N :

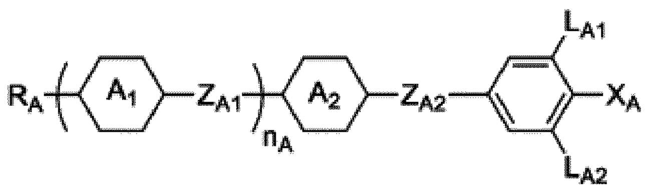 A;

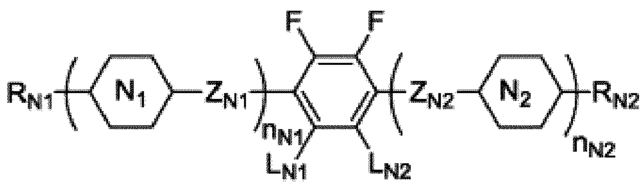 N,

dans lesquelles,
$R_A$ représente un alkyle en $C_{1-12}$ linéaire ou ramifié,

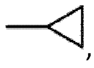 , 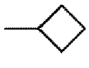 ou 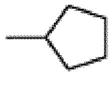 ,

un ou plusieurs $-CH_2-$ non adjacents dans l'alkyle en $C_{1-12}$ linéaire ou ramifié peuvent être chacun indépendamment remplacés par -CH=CH-, -C=C-, -O-, -CO-, -CO-O- ou -O-CO-, et un ou plusieurs -H dans l'alkyle en $C_{1-12}$ linéaire ou ramifié,

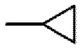, 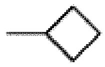 ou 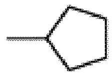

peuvent chacun indépendamment être remplacés par -F ou -Cl ;

$R_{N1}$ et $R_{N2}$ représentent chacun indépendamment un alkyle en $C_{1-12}$ linéaire ou ramifié,

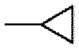, 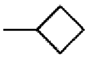 ou 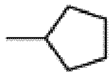,

un ou plusieurs $-CH_2-$ non adjacents dans l'alkyle en $C_{1-12}$ linéaire ou ramifié peuvent être chacun indépendamment remplacés par -CH=CH-, - C≡C-, -O-, -CO-, -CO-O- ou -O-CO- ;

le cycle

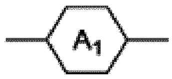

et le cycle

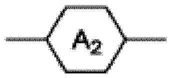

représentent chacun indépendamment

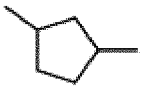, 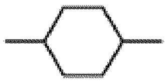, 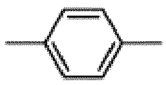 ou 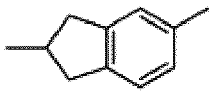,

dans lequel un ou plusieurs $-CH_2-$ dans

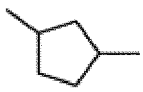, 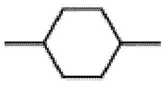 et 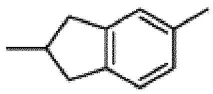

peuvent être remplacés par -O-, et une ou plusieurs liaisons simples dans les cycles peuvent être remplacées par une liaison double, dans lequel un ou plusieurs -H sur

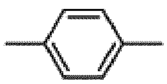 et 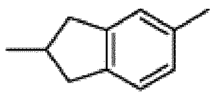

peuvent être remplacés par -CN, -F ou -Cl, et un ou plusieurs -CH= dans les cycles peuvent être remplacés par -N= ;

le cycle

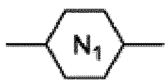

et le cycle

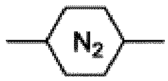

représentent chacun indépendamment

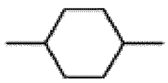 ou 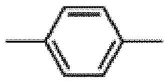 ,

dans lequel un ou plusieurs $-CH_2-$ dans

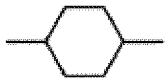

peuvent être remplacés par -O-, et une ou plusieurs liaisons simples dans le cycle peuvent être remplacées par une liaison double, dans lequel un ou plusieurs -H sur

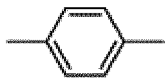

peuvent être remplacés par -CN, -F ou -Cl, et un ou plusieurs -CH= dans le cycle peuvent être remplacés par -N= ;
$Z_{A1}$, $Z_{A2}$, $Z_{N1}$ et $Z_{N2}$ représentent chacun indépendamment une liaison simple, $-CH_2CH_2-$, $-(CH_2)_4-$, $-CF_2CF_2-$, $-CF_2O-$, $-OCF_2-$, -CO-O-, -O-CO-, -O-CO-O-, -CH=CH-, -C=C-, - CF=CF-, $-CH_2O-$ ou $-OCH_2-$ ;
$L_{A1}$ et $L_{A2}$ représentent chacun indépendamment -H ou -F ;
$L_{N1}$ et $L_{N2}$ représentent chacun indépendamment -H ou $-CH_3$ ;
$X_A$ représente un halogène, -CN, un alkyle halogéné ou alcoxy halogéné en $C_{1-5}$, un alcényle halogéné ou alcénoxy halogéné en $C_{2-5}$ ; et
$n_A$, $n_{N1}$ et $n_{N2}$ représentent chacun indépendamment 0, 1, 2 ou 3, et $0 \leq n_{N1} + n_{N2} \leq 3$, et quand $n_A$ représente 2 ou 3, le cycle

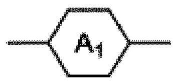

peut être identique ou différent, et $Z_{A1}$ peut être identique ou différent ; quand $n_{N1}$ représente 2 ou 3, le cycle

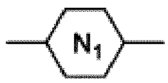

peut être identique ou différent, et $Z_{N1}$ peut être identique ou différent ; quand $n_{N2}$ représente 2 ou 3, le cycle

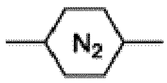

peut être identique ou différent, et $Z_{N2}$ peut être identique ou différent ;
dans lequel un composé contenant un substituant -CN dans la composition de cristaux liquides est en une quantité inférieure à 10 % du poids total de la composition de cristaux liquides ; et
dans lequel la composition de cristaux liquides comprend :

un ou plusieurs composés de formule générale M en une quantité de 5-50 % du poids total de la composition de cristaux liquides, et un ou plusieurs composés de formule générale A en une quantité de 50-95 % du poids total de la composition de cristaux liquides ; ou,

un ou plusieurs composés de formule générale M en une quantité de 5-30 % du poids total de la composition de cristaux liquides, et un ou plusieurs composés de formule générale N en une quantité de 70-95 % du poids total de la composition de cristaux liquides.

**2.** Dispositif d'affichage réflexif à cristaux liquides comprenant la composition de cristaux liquides dopée avec un colorant selon la revendication 1, dans lequel la couche réfléchissante est une couche réfléchissante spéculaire et/ou une couche réfléchissante diffuse.

**3.** Dispositif d'affichage réflexif à cristaux liquides comprenant la composition de cristaux liquides dopée avec un colorant selon la revendication 1, dans lequel un diffuseur est disposé entre le substrat inférieur et la couche réfléchissante.

**4.** Dispositif d'affichage réflexif à cristaux liquides comprenant la composition de cristaux liquides dopée avec un colorant selon la revendication 1, dans lequel le composé de formule générale M dans laquelle $R_{M1}$ et/ou $R_{M2}$ contiennent une structure -CH=CH-est en une quantité inférieure à 5 % du poids total de la composition de cristaux liquides.

**5.** Dispositif d'affichage réflexif à cristaux liquides comprenant la composition de cristaux liquides dopée avec un colorant selon une quelconque revendication précédente, dans lequel la composition de cristaux liquides comprend : un ou plusieurs composés de formule générale M en une quantité de 1-60 % du poids total de la composition de cristaux liquides, et un ou plusieurs composés de formule générale A en une quantité de 40-99 % du poids total de la composition de cristaux liquides; ou, un ou plusieurs composés de formule générale M en une quantité de 0-50 % du poids total de la composition de cristaux liquides, et un ou plusieurs composés de formule générale N en une quantité de 50-100 % du poids total de la composition de cristaux liquides.

**6.** Dispositif d'affichage réflexif à cristaux liquides comprenant la composition de cristaux liquides dopée avec un colorant selon une quelconque revendication précédente, dans lequel le colorant dichroïque est un ou plusieurs parmi un colorant dichroïque orange-jaune, un colorant dichroïque violet, un colorant dichroïque rouge, un colorant dichroïque rouge-violet et un colorant dichroïque bleu, et le colorant dichroïque est en une quantité de 1,5-6 % du poids total de la composition de cristaux liquides dopée avec un colorant.

**7.** Dispositif d'affichage réflexif à cristaux liquides comprenant la composition de cristaux liquides dopée avec un colorant selon une quelconque revendication précédente, dans lequel la couche de composition de cristaux liquides dopée avec un colorant présente une épaisseur de 3-25 $\mu$m.

**8.** Dispositif d'affichage réflexif à cristaux liquides comprenant la composition de cristaux liquides dopée avec un colorant selon une quelconque revendication précédente, dans lequel quand la composition de cristaux liquides présente une anisotropie diélectrique positive, la composition de cristaux liquides dopée avec un colorant présente un angle de torsion entre 180°-1 440°, et le pourcentage du dopant chiral dans la composition de cristaux liquides dopée avec un colorant par rapport au poids total de la composition de cristaux liquides dopée avec un colorant est entre 0,5/(dxHTP) - 4/(dxHTP), dans lequel d est l'épaisseur de la couche de composition de cristaux liquides dopée avec un colorant, et HTP est la constante d'énergie de torsion hélicoïdale des cristaux liquides.

**9.** Dispositif d'affichage réflexif à cristaux liquides comprenant la composition de cristaux liquides dopée avec un colorant selon l'une quelconque des revendications 1 à 7, dans lequel quand la composition de cristaux liquides présente une anisotropie diélectrique négative, la composition de cristaux liquides dopée avec un colorant présente un angle de torsion entre 90°-360°, et le pourcentage du dopant chiral dans la composition de cristaux liquides dopée avec un colorant par rapport au poids total de la composition de cristaux liquides dopée avec un colorant est entre 1/(4dxHTP) - 1/(dxHTP), dans lequel d est l'épaisseur de la couche de composition de cristaux liquides dopée avec un colorant, et HTP est la constante d'énergie de torsion hélicoïdale des cristaux liquides.

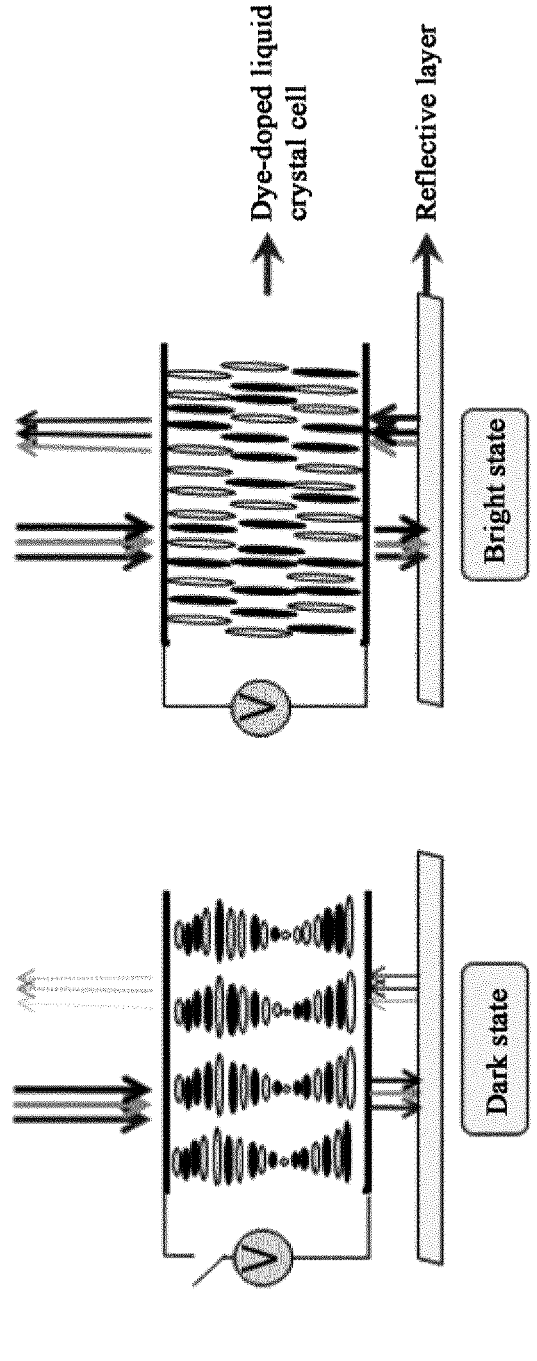
Dye-doped liquid crystal cell
Reflective layer
Bright state
Dark state

Fig. 1

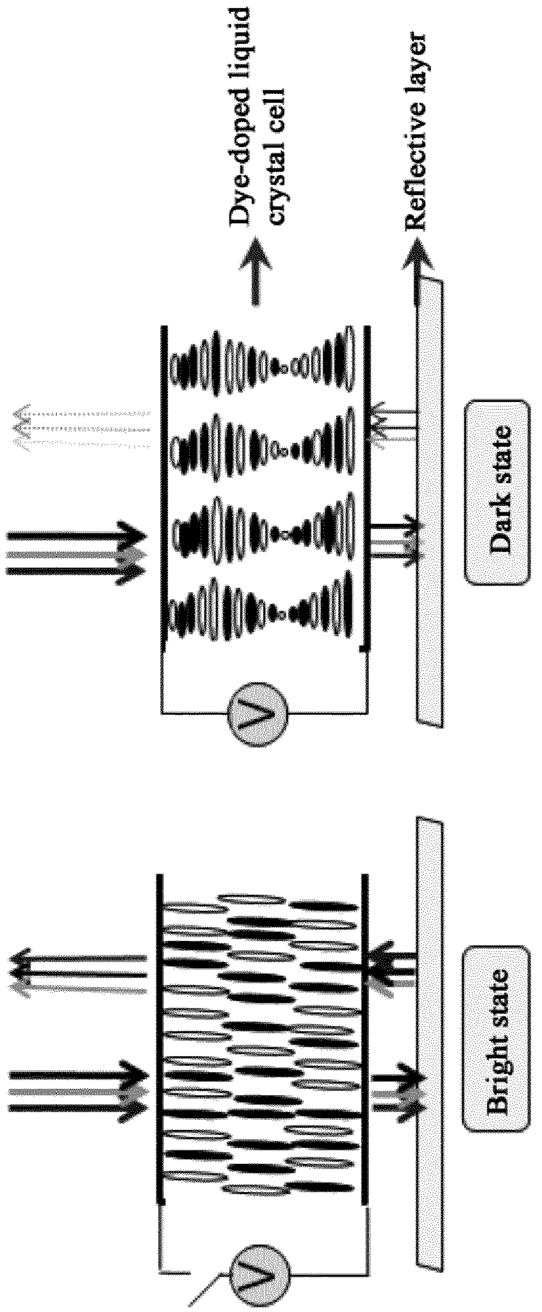
Dye-doped liquid
crystal cell
Reflective layer
Dark state
Bright state

Fig. 2

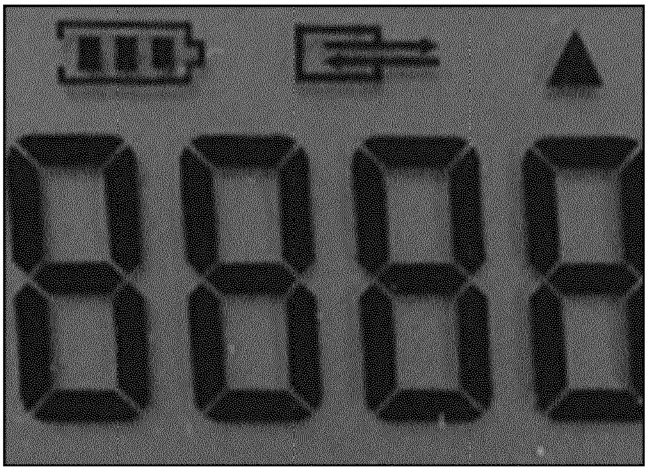

(a)

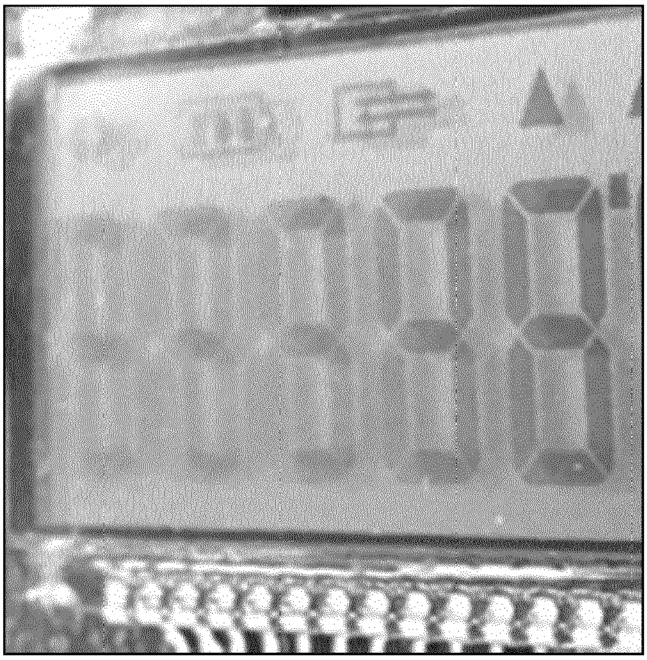

(b)

Fig. 3

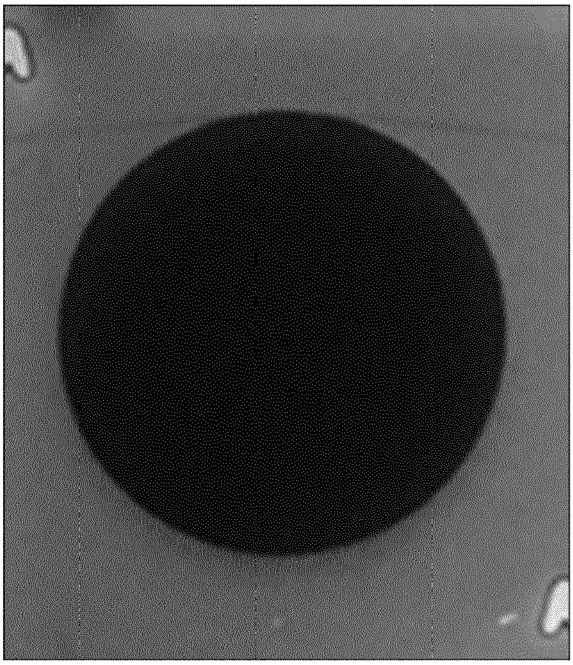

(a)

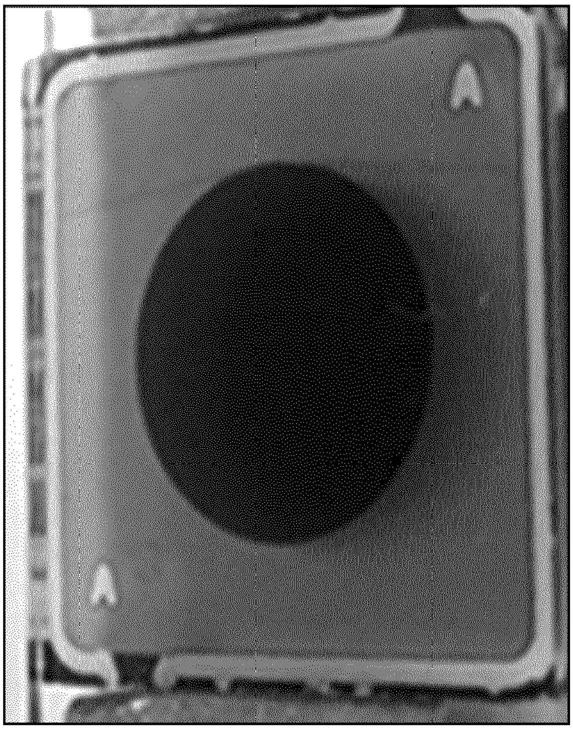

(b)

Fig. 4

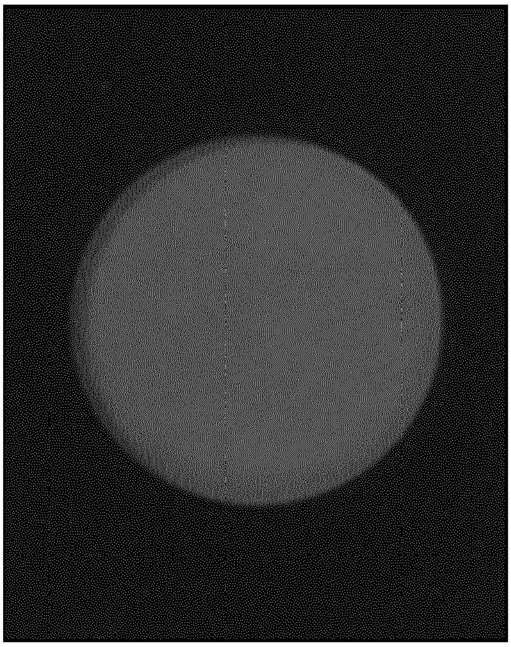

(a)

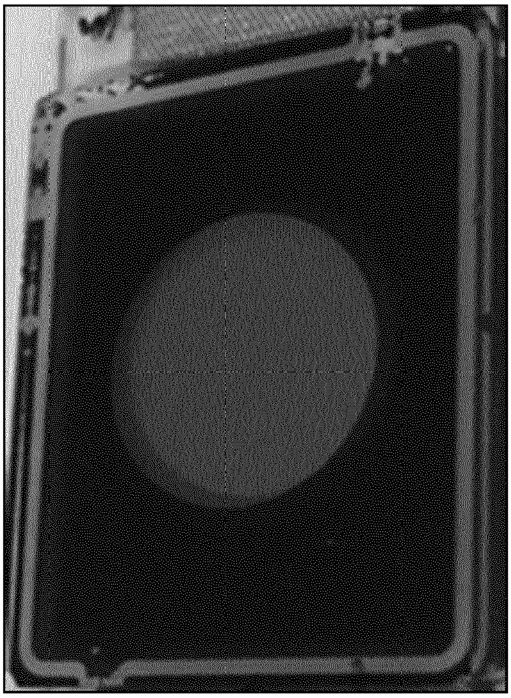

(b)

Fig. 5

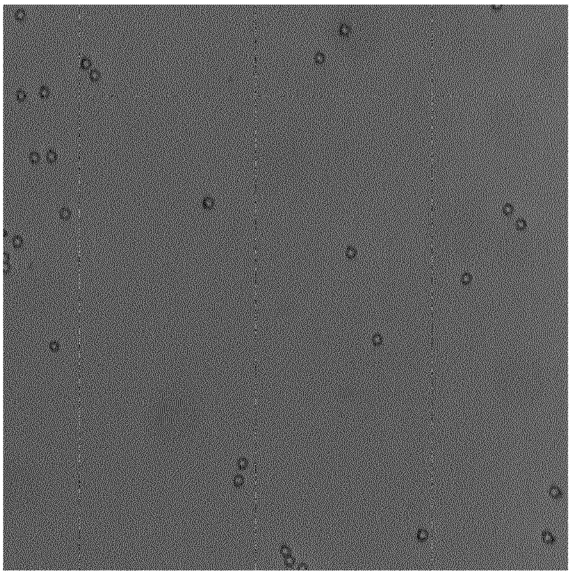

Fig. 6

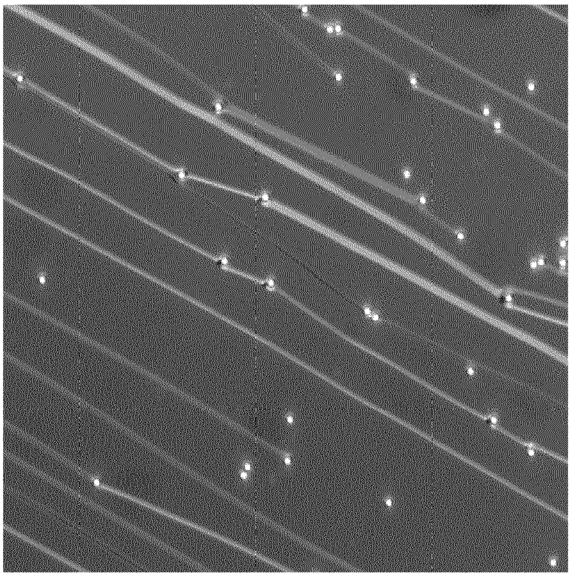

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 104216166 A
- US 20120217438 A1